(19) Europäisches Patentamt
European Patent Office
Office européen des brevets

(11) EP 2 860 215 A1

(12) **EUROPEAN PATENT APPLICATION**
published in accordance with Art. 153(4) EPC

(43) Date of publication:
**15.04.2015 Bulletin 2015/16**

(21) Application number: **13803809.6**

(22) Date of filing: **06.06.2013**

(51) Int Cl.:
***C08J 7/12*** *(2006.01)* ***C08J 7/16*** *(2006.01)*

(86) International application number:
**PCT/JP2013/065722**

(87) International publication number:
**WO 2013/187311 (19.12.2013 Gazette 2013/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.06.2012 JP 2012133074**

(71) Applicant: **Mitsui Chemicals, Inc.**
**Tokyo 105-7117 (JP)**

(72) Inventor: **OKAZAKI, Koju**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(54) **MODIFIED HYDROPHILIC ACRYLIC RESIN FILM**

(57) [Problem]

To provide hydrophilic modified acrylic resin films which exhibit excellent antifogging properties and antifouling properties and high transparency.

[Solution]

A modified acrylic resin film of the invention is obtained by treating a surface of an acrylic resin film having anionic hydrophilic groups with a compound (A), the acrylic resin film being such that the concentration of the anionic hydrophilic groups on the surface is higher than the concentration of the anionic hydrophilic groups at a depth half the film thickness from the surface of the acrylic resin film, the compound (A) having in the molecule thereof one or more anionic hydrophilic groups and one or more groups selected from groups having a polymerizable carbon-carbon double bond, amino groups, mercapto groups and hydroxyl groups.

[Fig. 1]

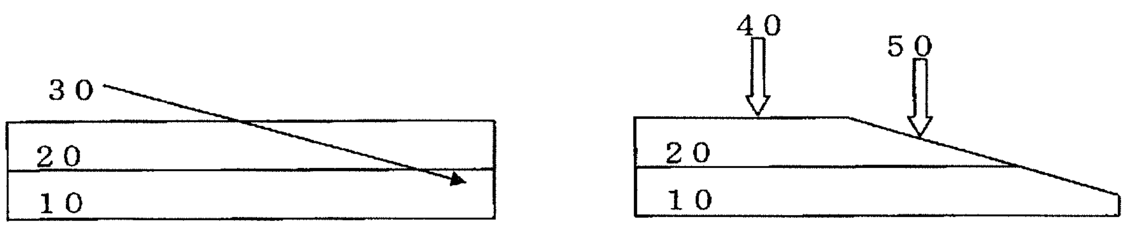


EP 2 860 215 A1

## Description

### TECHNICAL FIELD

The present invention relates to hydrophilic modified acrylic resin films excellent in antifogging properties, antifouling properties and transparency, and to stacks having the modified acrylic resin films.

### BACKGROUND ART

There have recently been increasing demands that substrates formed of organic materials such as plastics and inorganic materials such as glass be improved in terms of antifogging properties and antifouling properties.

To solve the fogging problems, a method has been proposed in which an antifogging coating containing a reactive surfactant and an acrylic oligomer is applied to provide enhanced hydrophilicity and water absorption (see, for example, Non Patent Document 1). The fouling problems have been addressed by methods in which the hydrophilicity of the surface of materials is enhanced so that fouling such as hydrophobic substances in the air which have become attached to surfaces such as exterior walls can be detached and removed from the surfaces by water spray or rainfall (see, for example, Non Patent Documents 2 and 3).

Further, hydrophilic materials have been proposed in which a crosslinkable polymerizable monomer composition is applied onto the surface of a substrate and is incompletely polymerized while controlling the dose of UV irradiation to form a crosslinked polymer, and subsequently a hydrophilic monomer is applied and UV rays are applied again to block- or graft-polymerize the hydrophilic monomer to the surface of the crosslinked polymer (Patent Document 1 and Patent Document 2).

However, this simple block or graft polymerization of a hydrophilic monomer to the surface of a substrate only attaches the hydrophilic groups to the surface, resulting in low durability. Thus, the hydrophilic materials have drawbacks in that they cannot withstand long-term use.

To solve the above problem, the present inventors have proposed a monolayer film in which specific anionic hydrophilic groups have a concentration gradient (an uneven distribution) between the inside of the film and the film surface and the anionic hydrophilic groups are present in a higher concentration near the surface (Patent Document 3 and Patent Document 4).

### CITATION LIST

### PATENT LITERATURE

Patent Document 1: JP-A-2001-98007
Patent Document 2: JP-A-2011-229734
Patent Document 3: WO 2007/064003
Patent Document 4: WO 2012/014829

### NON PATENT LITERATURE

Non Patent Document 1: TREND, annual research report by TOAGOSEI CO., LTD., 1999, February issue, pp. 39-44
Non Patent Document 2: Koubunshi (Polymers), 44(5), p. 307
Non Patent Document 3: Mirai Zairyou (Future materials), 2(1), pp. 36-41

### SUMMARY OF INVENTION

### TECHNICAL PROBLEM

An object of the present invention is to improve the durability while further increasing the hydrophilicity of the previous applications of the present inventors (Patent Document 3 and Patent Document 4) and thereby to provide hydrophilic films which exhibit high performances such as antifogging properties, antifouling properties and anti-condensation properties and can withstand long-term use and also to provide stacks having the hydrophilic films.

SOLUTION TO PROBLEM

To achieve the above object, the present inventors have carried out extensive studies and have found that hydrophilicity may be further improved and also durability is increased by designing an acrylic resin film having anionic hydrophilic groups such that the concentration of the anionic hydrophilic groups on a surface is higher than the concentration of the anionic hydrophilic groups at a depth half the film thickness from the surface of the acrylic resin film, and also by treating the surface of the acrylic resin film with a compound (A) which has in the molecule thereof one or more anionic hydrophilic groups and one or more groups selected from groups having a polymerizable carbon-carbon double bond, amino groups, mercapto groups and hydroxyl groups. Based on the finding, the present inventors have completed the invention.

The present invention resides in a modified acrylic resin film obtained by treating a surface of an acrylic resin film having anionic hydrophilic groups with a compound (A), the acrylic resin film being such that the concentration of the anionic hydrophilic groups on the surface is higher than the concentration of the anionic hydrophilic groups at a depth half the film thickness from the surface of the acrylic resin film, the compound (A) having in the molecule thereof one or more anionic hydrophilic groups and one or more groups selected from groups having a polymerizable carbon-carbon double bond, amino groups, mercapto groups and hydroxyl groups.

ADVANTAGEOUS EFFECTS OF INVENTION

The hydrophilic films of the invention achieve improvements in hydrophilicity and durability and exhibit high performances such as antifogging properties, antifouling properties and anti-condensation properties for a long term of use.

BRIEF DESCRIPTION OF DRAWING

[Fig. 1] Fig. 1 is a view illustrating the preparation of samples in Examples.

DESCRIPTION OF EMBODIMENTS

A modified acrylic resin film of the invention is obtained by treating an acrylic resin film having anionic hydrophilic groups. Specifically, the inventive modified acrylic resin film is obtained by treating a surface of an acrylic resin film having anionic hydrophilic groups in a higher concentration on the surface than at a depth half the film thickness from the surface of the acrylic resin film, with a compound (A) having in the molecule thereof one or more anionic hydrophilic groups and one or more groups selected from groups having a polymerizable carbon-carbon double bond, amino groups, mercapto groups and hydroxyl groups.

[Acrylic resin films having anionic hydrophilic groups in higher concentration on the surface than at depth half the film thickness from the surface]

The acrylic resin films used in the invention are not limited as long as the acrylic resin films are such that the concentration of the anionic hydrophilic groups on the surface is higher than the concentration of the anionic hydrophilic groups at a depth half the film thickness from the surface. In the specification, such films are otherwise written as the "films having a gradient of anionic hydrophilic groups (gradient films)". Examples of such films having a gradient of anionic hydrophilic groups include highly hydrophilic films in which the concentration of anionic hydrophilic groups on the surface is increased by evaporating the solvent (Patent Document 3 and Patent Document 4), and such films may be suitably used as the films to be treated in the invention. Here, the anionic hydrophilic groups indicate hydrophilic functional groups selected from sulfonic groups, carboxyl groups and phosphoric groups. Of these, sulfonic groups are particularly preferable because higher hydrophilicity may be imparted to the surface.

TOF-SIMS is used in the analysis of the anionic hydrophilic groups in the acrylic resin film (the film having a gradient of anionic hydrophilic groups) used in the invention in which the concentration of the anionic hydrophilic groups on the surface is higher than the concentration of the anionic hydrophilic groups at a depth half the film thickness from the surface. The property that the concentration of the anionic hydrophilic groups is higher on the surface than at a depth half the film thickness from the surface is usually represented by the anion concentration ratio Sa/Da (the ratio of the anion concentration Sa at the film surface to the anion concentration Da at a depth half the film thickness from the surface). Any ratio Sa/Da exceeding 1.0 is defined to indicate that the concentration of the anionic hydrophilic groups on the surface is higher than the concentration of the anionic hydrophilic groups at a depth half the film thickness from the surface. This Sa/Da may be also referred to as the degree of the gradient of anionic hydrophilic groups.

In the invention, the acrylic resin film is treated with a compound (A) having in the molecule thereof one or more

anionic hydrophilic groups and one or more groups selected from groups having a polymerizable carbon-carbon double bond, amino groups, mercapto groups and hydroxyl groups. This acrylic resin film is preferably a hydrophilic gradient acrylic resin film having a degree of the gradient of anionic hydrophilic groups (Sa/Da) of 1.1 or more. Further, the acrylic resin gradient film to be treated with the compound (A) preferably has higher surface hydrophilicity, and preferably has a water contact angle of not more than 30°, more preferably not more than 20°, and still more preferably not more than 10°.

The acrylic resin films used in the invention which have a higher concentration of the anionic hydrophilic groups on the surface than at a depth half the film thickness from the surface may be obtained by the method described in Patent Document 3 or Patent Document 4. For example, the films may be produced by a production method including a step of preparing a mixture including a polyvalent monomer (II) having two or more (meth)acryloyl groups, a compound (A') having at least one anionic hydrophilic group and at least one group selected from groups having a polymerizable carbon-carbon double bond, amino groups, mercapto groups and hydroxyl groups (this compound is different from the polyvalent monomer (II)) and a solvent including, for example, a compound with a solubility parameter $\sigma$ (cal/cm$^3$) of not less than 9.3, and preferably not less than 9.5; a step of applying the mixture onto at least one side of a substrate surface; a step of removing at least part of the solvent from the mixture applied; and a step of polymerizing the mixture resulting from the above steps.

The acrylic film used in the invention has anionic hydrophilic groups in high concentrations on the surface and inside near the surface. In the treatment with the hydrophilic compound (A), this configuration allows the film to exhibit high affinity for the hydrophilic compound (A). As a result, it is probable that the treatment takes place without fail on the surface to allow a large number of anionic hydrophilic groups to be grafted, while at the same time the penetration of the hydrophilic compound into an inner portion of the film near the surface is facilitated and the grafting of the anionic hydrophilic groups is effected even in the inside of the film. Thus, high concentrations of the anionic hydrophilic groups on and near the surface may be obtained more easily when the films having a gradient of anionic hydrophilic groups are treated with the compound (A) than when other film materials are treated with the hydrophilic compound (A). As a result, hydrophilicity is markedly increased. Even if the surface has become degraded or decomposed to some degree, the anionic hydrophilic groups present in the inner portion near the surface will back up or repair the surface and consequently a decrease in hydrophilicity will be suppressed (durability will be improved). The inventive configuration will also realize a good balance between hydrophilicity and other properties such as transparency. Further, excellent adhesion may be obtained between the acrylic film and the portion formed of the compound (A).

[Compounds (A)]

The compound (A) used in the treatment in the invention has, in the molecule thereof, one or more anionic hydrophilic groups and one or more groups selected from groups having a polymerizable carbon-carbon double bond, amino groups, mercapto groups and hydroxyl groups. The polymerizable carbon-carbon double bonds present in the compounds (A) indicate, for example, radically polymerizable functional groups selected from (meth)acryloyloxy groups, (meth)acryloylthio groups, (meth)acrylamide groups, allyl groups, vinyl groups and isopropenyl groups.

Of the compounds (A), relatively preferred compounds are represented by:

General Formula (1):

[Chem. 1]

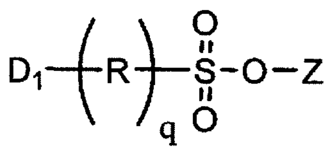

(1)

(in Formula (1), $D_1$ is a (meth)acryloyloxy group (only when q is 1), a (meth)acryloylthio group (only when q is 1), a (meth)acrylamide group (only when q is 1), a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; R is a divalent aliphatic hydrocarbon group having 1 to 600 carbon atoms and may include one or more groups selected from aromatic rings, alicyclic groups, ether groups and ester groups; and q is 0 or 1),

General Formula (2):

[Chem. 2]

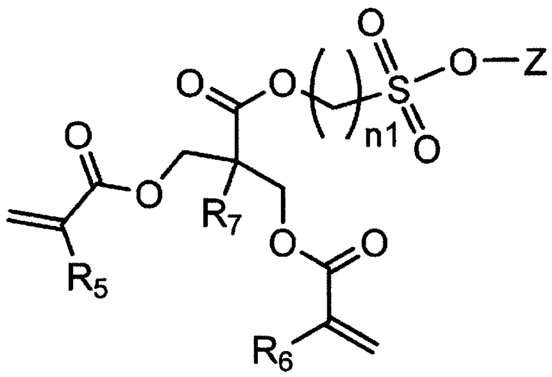

(2)

(in Formula (2), $R_5$ and $R_6$ represent a hydrogen atom or a methyl group; $R_7$ represents a hydrogen atom or an alkyl group having 1 to 6 carbon atoms; Z is a hydrogen ion, an ammonium ion, an amine ion, an alkali metal ion or an alkaline earth metal (1/2 atom) ion; and n1 is an integer of 1 to 10),

General Formula (3):

[Chem. 3]

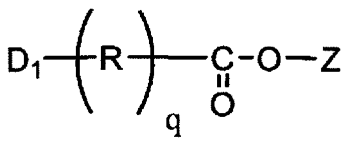

(3)

(in Formula (3), $D_1$ is a (meth)acryloyloxy group (only when q is 1), a (meth)acryloylthio group (only when q is 1), a (meth)acrylamide group (only when q is 1), a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; R is a divalent aliphatic hydrocarbon group having 1 to 600 carbon atoms and may include one or more groups selected from aromatic rings, alicyclic groups, ether groups and ester groups; and q is 0 or 1),

General Formula (4):

[Chem. 4]

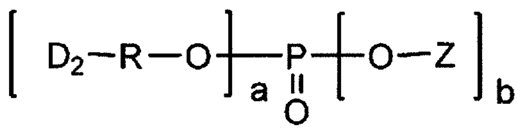

(4)

(in Formula (4), $D_2$ is a (meth)acryloyloxy group, a (meth)acryloylthio group, a (meth)acrylamide group, a vinyl

group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; R is a divalent aliphatic hydrocarbon group having 1 to 600 carbon atoms and may include one or more groups selected from aromatic rings, alicyclic groups, ether groups and ester groups; a and b represent integers of 1 or 2, and a + b = 3; when a is 2, $D_2$s or Rs may be the same or different from each other; and when b is 2, Zs may be the same or different from each other),

General Formula (5):

[Chem. 5]

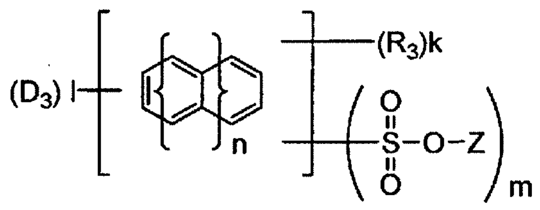

(5)

(in Formula (5), $D_3$, $R_3$ and $SO_3Z$ are groups bonded to carbon atoms on the ring (s) in the above formula; $D_3$ independently at each occurrence represents a vinyl group, an allyl group, an isopropenyl group, a styryl group, a mercapto group, an amino group, a methylamino group, an ethylamino group or a hydroxyl group; Z is a hydrogen ion, an ammonium ion, an amine ion, an alkali metal ion or an alkaline earth metal (1/2 atom) ion; $R_3$ independently at each occurrence represents H, a methyl group, an ethyl group, a methoxy group, an ethoxy group, a fluorine atom, a chlorine atom, a bromine atom or an iodine atom; k is an integer of 0 to 10; 1 and m independently represent an integer of 1 to 11; k + 1 + m = 2 to 6 + 2n; n is an integer of 0 to 3; when 1 is 2 or greater, $D_3$s may be the same or different from each other; when k is 2 or greater, $R_3$s may be the same or different from each other; when m is 2 or greater, Zs may be the same or different from each other; and the above compounds desirably exclude the compounds represented by General Formula (1)), and

General Formula (6):

[Chem. 6]

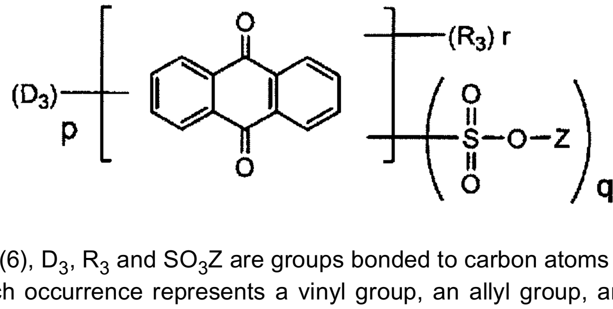

(6)

(in Formula (6), $D_3$, $R_3$ and $SO_3Z$ are groups bonded to carbon atoms on the ring(s) in the above formula; $D_3$ independently at each occurrence represents a vinyl group, an allyl group, an isopropenyl group, a styryl group, a mercapto group, an amino group, a methylamino group, an ethylamino group or a hydroxyl group; Z is a hydrogen ion, an ammonium ion, an amine ion, an alkali metal ion or an alkaline earth metal (1/2 atom) ion; $R_3$ independently at each occurrence represents H, a methyl group, an ethyl group, a methoxy group, an ethoxy group, a fluorine atom, a chlorine atom, a bromine atom or an iodine atom; r is an integer of 0 to 6; q and p independently represent an integer of 1 to 7; p + q + r = 2 to 8; when p is 2 or greater, $D_3$s may be the same or different from each other; when r is 2 or greater, $R_3$s may be the same or different from each other; and when q is 2 or greater, Zs may be the same or different from each other).

Referring to Formula (5), k, 1, m and n are such that n is an integer of 0 to 3; when n = 0, k is an integer of 0 to 4, 1 and m are independently an integer of 1 to 5, and k + 1 + m = 2 to 6; when n = 1, k is an integer of 0 to 6, 1 and m are independently an integer of 1 to 7, and k + 1 + m = 2 to 8; when n = 2, k is an integer of 0 to 8, 1 and m are independently an integer of 1 to 9, and k + 1 + m = 2 to 10; and when n = 3, k is an integer of 0 to 10, 1 and m are

independently an integer of 1 to 11, and k + 1 + m = 2 to 12.

Of the compounds represented by General Formula (1), more preferred compounds are represented by General Formula (7):

[Chem. 7]

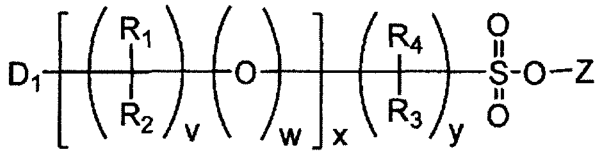

(7)

(In Formula (7), $D_1$ is a (meth)acryloyloxy group (when any of x and y is 1 or greater), a (meth)acryloylthio group (when any of x and y is 1 or greater), a (meth) acrylamide group (when any of x and y is 1 or greater), a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; $R_1$ to $R_4$ are independently a hydrogen atom, an alkyl group having 1 to 6 carbon atoms or an alkoxy group having 1 to 6 carbon atoms;

v and y are independently an integer of 0 to 10; w is 0 or 1 (when any of v and y is 0, w is 0); x is an integer of 0 to 10; when v is 2 or greater, $R_1$s or $R_2$s may be the same or different from each other; when y is 2 or greater, $R_3$s or $R_4$s may be the same or different from each other; and when x is 2 or greater, $R_1$s or $R_2$s may be the same or different from each other.)

Of the compounds represented by General Formula (7), those compounds in which v = w = x = 0 and y is an integer of 1 to 10 are preferable, and those compounds in which v = w = x = 0 and y is an integer of 1 to 3 are more preferable.

Typical examples of the compounds represented by General Formula (7) include sodium 2-(meth)acryloyloxyethylsulfonate, 3-(meth)acryloyloxypropylsulfonic acid, lithium 3-(meth)acryloyloxypropylsulfonate, sodium 3-(meth)acryloyloxypropylsulfonate, potassium 3-(meth)acryloyloxypropylsulfonate, rubidium 3-(meth)acryloyloxypropylsulfonate, ammonium 3-(meth)acryloyloxypropylsulfonate, calcium 3-(meth)acryloyloxypropylsulfonate, magnesium 3-(meth)acryloyloxypropylsulfonate, sodium 5-(meth)acryloyloxy-3-oxapentylsulfonate, sodium 2-(meth)acryloylthioethylsulfonate, 2-(meth)acrylamido-2-methyl-propanesulfonic acid ((meth)acrylamido-t-butylsulfonic acid), potassium 2-(meth)acrylamido-2-methyl-propanesulfonate (potassium (meth)acrylamido-t-butylsulfonate), sodium vinylsulfonate, potassium allylsulfonate, isopropenylsulfonic acid, styrenesulfonic acid, sodium styrenesulfonate, sodium 2-mercaptoethylsulfonate, sodium 3-mercaptopropylsulfonate, 8-mercapto-3,6-dioxaoctylsulfonic acid, aminomethanesulfonic acid, sodium aminomethanesulfonate, potassium aminomethanesulfonate, taurine, taurine sodium salt, taurine potassium salt, sodium 2-methylamino-ethanesulfonate and sodium 2-ethylamino-ethanesulfonate.

Examples of the compounds represented by General Formula (2) include 2,2-bis((meth)acryloyloxymethyl)acetic acid-3-sulfopropyl ester, 2,2-bis((meth)acryloyloxymethyl)acetic acid-3-sulfopropyl ester potassium salt, 2,2-bis((meth)acryloyloxymethyl)acetic acid-3-sulfoethyl ester potassium salt, 2,2-bis((meth)acryloyloxymethyl)acetic acid-3-sulfobutyl ester potassium salt, 2,2-bis((meth)acryloyloxymethyl)acetic acid-3-sulfohexyl ester potassium salt, 2,2-bis((meth)acryloyloxymethyl)acetic acid-3-sulfodecyl ester potassium salt, 2,2-bis((meth)acryloyloxymethyl)propionic acid-2-sulfomethyl ester potassium salt, 2,2-bis((meth)acryloyloxymethyl)propionic acid-2-sulfoethyl ester sodium salt, 2,2-bis((meth)acryloyloxymethyl)propionic acid-3-sulfopropyl ester, 2,2-bis((meth)acryloyloxymethyl)propionic acid-3-sulfopropyl ester sodium salt, 2,2-bis((meth)acryloyloxymethyl)propionic acid-3-sulfopropyl ester potassium salt, 2,2-bis((meth)acryloyloxymethyl)butylcarboxylic acid-3-sulfopropyl ester potassium salt and 2,2-bis((meth)acryloyloxymethyl)hexylcarboxylic acid-3-sulfopropyl ester potassium salt.

Of the compounds represented by General Formula (3), more preferred compounds are represented by General Formula (8):

[Chem. 8]

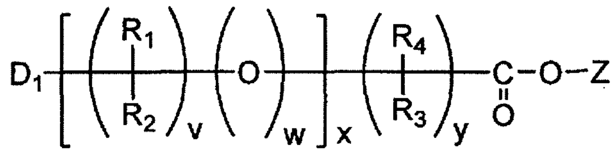

(8)

(In Formula (8), $D_1$ is a (meth)acryloyloxy group (when any of x and y is 1 or greater), a (meth)acryloylthio group (when any of x and y is 1 or greater), a (meth) acrylamide group (when any of x and y is 1 or greater), a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; $R_1$ to $R_2$ are independently a hydrogen atom, an alkyl group having 1 to 6 carbon atoms or an alkoxy group having 1 to 6 carbon atoms; v and y are independently an integer of 0 to 10; w is 0 or 1 (when any of v and y is 0, w is 0); x is an integer of 0 to 10; when v is 2 or greater, $R_1$s or $R_2$s may be the same or different from each other; when y is 2 or greater, $R_3$s or $R_4$s may be the same or different from each other; and when x is 2 or greater, $R_1$s or $R_2$s may be the same or different from each other.)

Of the compounds represented by General Formula (8), those compounds in which v = w = x 0 represent a preferred embodiment.

Typical examples of the compounds represented by General Formula (8) include (meth) acrylic acid, sodium (meth) acrylate, potassium (meth)acrylate, (meth)acryloyloxyethylcarboxylic acid, sodium (meth)acryloyloxyethylcarboxylate salt, (meth)acrylamidoethylcarboxylic acid, allylcarboxylic acid, isopropenylcarboxylic acid, styrylcarboxylic acid, thioglycolic acid, sodium thioglycolate, 3-mercaptopropionic acid, sodium 3-mercaptopropionate, L-aspartic acid, potassium L-aspartate, sodium D-aspartate, β-alanine sodium, L-arginine potassium, glycine sodium, sodium L-glutamate, L-cystine potassium, L-serine potassium and glycylglycine sodium.

Of the compounds represented by General Formula (4), more preferred compounds are represented by General Formula (9):

[Chem. 9]

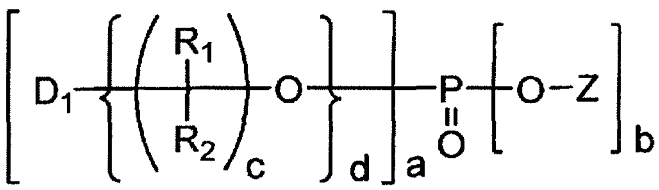

(9)

(In Formula (9), $D_1$ is a (meth)acryloyloxy group, a (meth)acryloylthio group, a (meth)acrylamide group, a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; $R_1$ to $R_4$ are independently a hydrogen atom, an alkyl group having 1 to 6 carbon atoms or an alkoxy group having 1 to 6 carbon atoms; a and b represent 1 or 2, and a + b = 3; c is an integer of 1 to 20; d is an integer of 1 to 10; when c is 2 or greater, $R_1$s or $R_2$s may be the same or different from each other; when d is 2 or greater, $R_1$s or $R_2$s may be the same or different from each other; when a is 2, $D_1$s, $R_1$s or $R_2$s may be the same or different from each other; and when b is 2, Zs may be the same or different from each other.)

Typical examples of the compounds represented by General Formula (9) include sodium (meth)acryloyloxymethylphosphate, (meth)acryloyloxyethylphosphoric acid, sodium (meth)acryloyloxyethylphosphate, potassium bis{(meth)acryloyloxyethyl}phosphate, potassium 5-(meth)acryloyloxy-3-oxapentylphosphate, sodium 8-(meth)acryloyloxy-3,6-dioxaoctylphosphate, potassium 11-(meth)acryloyloxy-3,6,9-trioxaundecylphosphate and sodium styryloxyethylphosphate.

Examples of the compounds represented by General Formula (5) include 3-aminobenzenesulfonic acid, sodium 4-aminobenzenesulfonate salt, 5-aminotoluene-2-sulfonic acid, sodium 4-amino-3-methoxybenzenesulfonate salt, potassium 3-amino-4-methoxybenzenesulfonate salt, monopotassium 7-amino-1,3-naphthalenedisulfonate salt, monosodium 8-amino-1,3-naphthalenedisulfonate salt, disodium 7-amino-1,3,6-naphthalenetrisulfonate salt, trisodium 8-amino-1,3,6-naphthalenetrisulfonate salt, sodium 4-hydroxybenzenesulfonate salt, potassium 4-hydroxy-3-methoxybenzenesulfonate salt, disodium 1,2-dihydroxy-3,5-benzenedisulfonate salt, dipotassium 2-hydroxy-6,8-naphthalenesulfonate

salt and trisodium 8-hydroxypyrene-1,3,6-trisulfonate salt. Of these compounds, sodium 4-aminobenzenesulfonate salt, sodium 5-aminotoluene-2-sulfonate salt, monopotassium 7-amino-1,3-naphthalenedisulfonate salt, trisodium 8-amino-1,3,6-naphthalenetrisulfonate salt and sodium 4-hydroxybenzenesulfonate salt are preferable.

Examples of the compounds represented by General Formula (6) include sodium 1-aminoanthraquinone-2-sulfonate, sodium 1-aminoanthraquinone-4-sulfonate, sodium 1-aminoanthraquinone-8-sulfonate, sodium 1-amino-4-bromoanthraquinone-2-sulfonate and sodium 1-amino-2,4-dihydroxyanthraquinone-3-sulfonate. Of these compounds, sodium 1-amino-4-bromoanthraquinone-2-sulfonate and sodium 1-amino-2,4-dihydroxyanthraquinone-3-sulfonate are preferable.

[Treatment with compounds (A)]

A solution of the compound (A) having an anionic hydrophilic group is applied to the acrylic resin film having a higher concentration of anionic hydrophilic groups on the surface than at a depth half the film thickness from the surface. A radiation or heat is then applied to allow the compound (A) to be grafted to the surface, and thereby the concentrations of the anionic hydrophilic groups on the surface and in an inner portion near the surface are increased. In this manner, a further increase in hydrophilicity may be obtained and antifogging properties may be improved. A typical example of the grafting reaction of the compound (A) to the gradient film will be described below.

[Chem. 10]

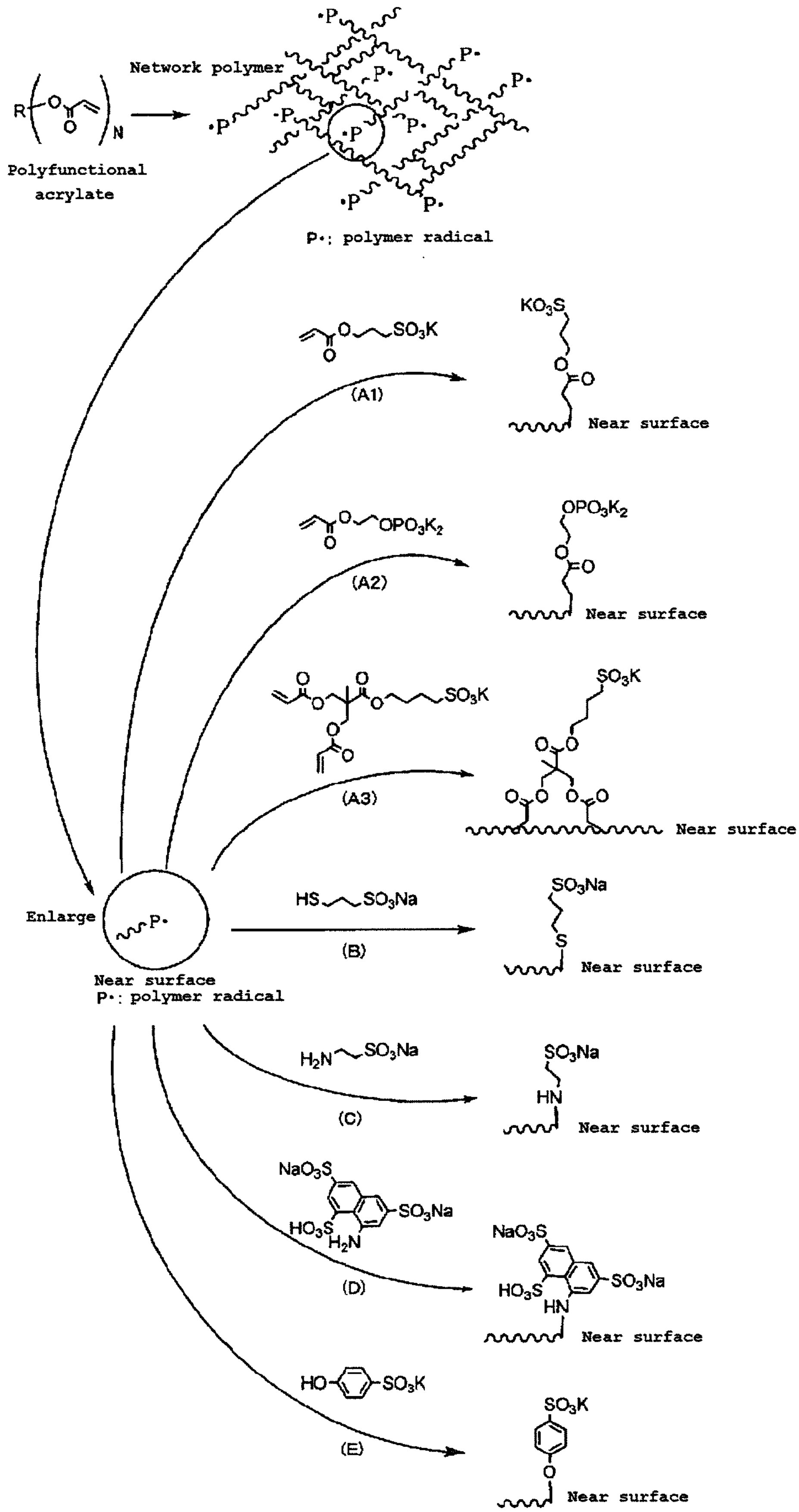


The acrylic resin films used in the invention which have a higher concentration of the anionic hydrophilic groups

on the surface than at a depth half the film thickness from the surface may be obtained by the method described in Patent Document 3 or Patent Document 4. For example, the films may be produced by a production method including a step of preparing a mixture including a polyvalent monomer (II) having two or more (meth)acryloyl groups, a compound (A') having at least one anionic hydrophilic group and at least one group selected from groups having a polymerizable carbon-carbon double bond, amino groups, mercapto groups and hydroxyl groups (this compound is different from the polyvalent monomer (II)) and a solvent including, for example, a compound with a solubility parameter $\sigma$ (cal/cm$^3$) of not less than 9.3, and preferably not less than 9.5; a step of applying the mixture onto at least one side of a substrate surface; a step of removing at least part of the solvent from the mixture applied; and a step of polymerizing the mixture resulting from the above steps. That is, a method for producing the modified acrylic resin film preferably includes steps of forming the aforementioned acrylic resin film on a substrate.

For example, the acrylic films used in the invention may be obtained by a single application of the mixture containing the compound (A') and the polyfunctional monomer (II). Films produced in this manner will be sometimes referred to as "monolayer films". In the invention, the acrylic film is preferably a monolayer film.

Alternatively, the substrate may be removed from the stack of the substrate and the acrylic resin film obtained by the aforementioned steps, and the acrylic resin film may be attached or stacked as a hydrophilic film onto another substrate.

In the polyvalent monomers (II) having two or more (meth)acryloyl groups, examples of the (meth)acryloyl groups include (meth)acryloyloxy groups, (meth)acryloylthio groups and (meth) acrylamide groups, with (meth) acryloyloxy groups and (meth)acryloylthio groups being particularly preferable. Preferred examples of the polyvalent monomers (II) include compounds having one or more hydroxyl groups and two or more (meth)acryloyl groups in the molecule, compounds having one or more ether bonds or thioether bonds and two or more (meth) acryloyl groups in the molecule, compounds having, other than (meth)acrylate groups, one or more ester bonds and two or more (meth) acryloyl groups in the molecule, compounds having one or more alicyclic or aromatic ring structures and two or more (meth)acryloyl groups in the molecule, and compounds having one or more heterocyclic structures and two or more (meth)acryloyl groups in the molecule.

More specific examples include the compounds described in [0057] to [0150] of Patent Document 3 (WO 2007/064003, applicant: MITSUI CHEMICALS, INC., inventors: Koju OKAZAKI et al.). The preferred embodiments of the compounds described in Patent Document 3 also apply to the present invention.

Examples of the compounds (A') having at least one anionic hydrophilic group and at least one group selected from groups having a polymerizable carbon-carbon double bond, amino groups, mercapto groups and hydroxyl groups include compounds similar to the compounds (A) described later. Compounds similar to the compounds (A) represented by General Formulae (1) to (6) are preferable.

In addition to the polyvalent monomer (II), the compound (A') and the solvent, the production of the acrylic resin films may optionally involve additives such as polymerization initiators, polymerization accelerators, UV absorbers, hindered amine light stabilizers (HALS), catalysts, UV absorbing agents, radical scavengers, internal release agents, antioxidants, polymerization inhibitors, pigments, binders and leveling agents. The amount of the solvent is not particularly limited, but is usually not less than 1 part by weight and not more than 99 parts by weight, preferably not less than 5 parts by weight and not more than 95 parts by weight, and more preferably not less than 10 parts by weight and not more than 90 parts by weight with respect to 100 parts by weight of the total of the additives, the polyvalent monomer (II), the compound (A') and the solvent. At this stage, the mixture may further contain a solvent having a solubility parameter out of the aforementioned range as long as the advantageous effect of the invention can be achieved. After the step of removing at least part of the solvent from the mixture applied, namely, immediately before the polymerization, the ratio of (total residual solvent) to (mixture applied - solvent removed) is preferably not more than 10 wt%, more preferably not more than 9 wt%, still more preferably not more than 5 wt%, and particularly preferably not more than 1 wt%.

The acrylic films obtained by an appropriate method, for example, the method described above, will be usually such that the concentration of the anionic hydrophilic groups increases in the direction from a position at a depth half the film thickness from the surface, to the surface of the film.

Regarding the compounds (A') used in the gradient films, (meth)acrylates having an anionic hydrophilic group are preferably hydrophilic compounds exhibiting higher solubility in highly polar solvents such as alcohols and water, rather than being amphiphilic compounds. The compounds (A') desirably have a solubility of not more than 24 wt%, preferably not more than 10 wt%, and more preferably not more than 3 wt% in a mixed solvent of cyclohexane:toluene = 5:1 (by weight) at 25°C. Such compounds are advantageous in that films having the aforementioned degree of gradient (Sa/Da) may be obtained easily.

Preferred examples of the compounds (A') having an anionic hydrophilic group include compounds represented by General Formula (10):

[Chem. 11]

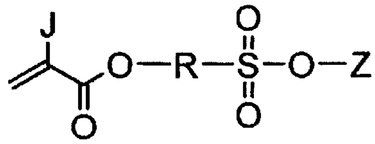

(10)

(in General Formula (10), J is a hydrogen atom or a methyl group; R is a divalent aliphatic hydrocarbon group having 1 to 600 carbon atoms and may include one or more groups selected from aromatic rings, alicyclic groups, ether groups and ester groups; and Z is a hydrogen ion, an ammonium ion, an amine ion, an alkali metal ion or an alkaline earth metal (1/2 atom) ion),
compounds represented by General Formula (11):

[Chem. 12]

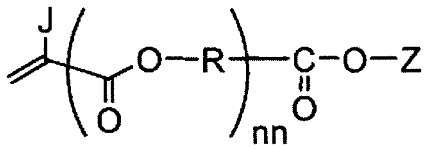

(11)

(in General Formula (11), J is a hydrogen atom or a methyl group; R is a divalent aliphatic hydrocarbon group having 1 to 600 carbon atoms and may include one or more groups selected from aromatic rings, alicyclic groups, ether groups and ester groups; Z is a hydrogen ion, an ammonium ion, an amine ion, an alkali metal ion or an alkaline earth metal (1/2 atom) ion; and nn is 0 or 1), and
compounds represented by General Formula (12):

[Chem. 13]

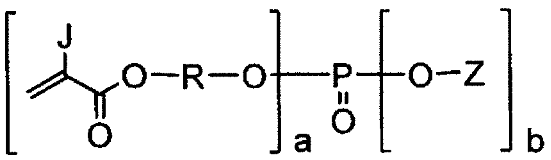

(12)

(in General Formula (12), J is a hydrogen atom or a methyl group; R is a divalent aliphatic hydrocarbon group having 1 to 600 carbon atoms and may include one or more groups selected from aromatic rings, alicyclic groups, ether groups and ester groups; Z is a hydrogen ion, an ammonium ion, an amine ion, an alkali metal ion or an alkaline earth metal (1/2 atom) ion; a and b independently represent 1 or 2, and a + b = 3; when a is 2, Js or Rs may be the same or different from each other; and when b is 2, Zs may be the same or different from each other).

Of the compounds represented by General Formulae (10) to (12), the compounds of General Formula (10) are relatively preferable.

Of the compounds represented by General Formula (10), more preferred compounds are represented by, for example, General Formula (13):

[Chem. 14]

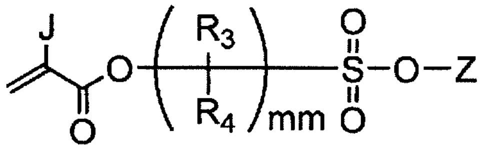

(13)

(in General Formula (13), J is a hydrogen atom or a methyl group; $R_3$ and $R_4$ independently represent a hydrogen atom, a methyl group or an ethyl group; Z is a hydrogen ion, an ammonium ion, an amine ion, an alkali metal ion or an alkaline earth metal (1/2 atom) ion; mm is an integer of 1 to 20; when mm is 2 or greater, $R_3$s or $R_4$s may be the same or different from each other; and in preferred embodiments, mm is 1 to 10, and particularly 1 to 3), and compounds represented by General Formula (14):

[Chem. 15]

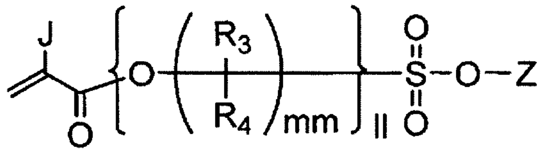

(14)

(in General Formula (14), J is a hydrogen atom or a methyl group; $R_3$ and $R_4$ independently represent a hydrogen atom, a methyl group or an ethyl group; Z is a hydrogen ion, an ammonium ion, an amine ion, an alkali metal ion or an alkaline earth metal (1/2 atom) ion; mm is an integer of 1 to 20; 11 is 2 to 10; and when mm is 2 or greater, $R_3$s or $R_4$s may be the same or different from each other).

In the production of the acrylic films (the gradient films) used in the invention, the polymerization may be performed by, for example, the application of radiations.

Examples of the substrates used in the invention optionally as required include substrates made of inorganic materials such as glasses, silicas, metals and metal oxides, substrates made of organic materials such as polymethyl methacrylates, polycarbonates, polyethylene terephthalates, polyethylenes, polypropylenes, polystyrenes, polyurethane resins, epoxy resins, vinyl chloride resins, silicone resins, paper and pulps, and these inorganic or organic material substrates having a cured coating layer on the surface.

In order to activate the substrate surface as required, the surface of these substrates may be subjected to physical or chemical treatments such as corona treatment, ozone treatment, low-temperature plasma treatment using a gas such as oxygen gas or nitrogen gas, glow discharge treatment, oxidation treatment with agents such as chemicals, and flame treatment. Instead of or in addition to such a treatment, the substrate surface may be subjected to primer treatment, undercoating treatment or anchor coating treatment.

Examples of the coating agents used in the primer treatment, the undercoating treatment and the anchor coating treatment include coating agents containing, as the main components of vehicles, resins such as polyester resins, polyamide resins, polyurethane resins, epoxy resins, phenolic resins, (meth)acrylic resins, polyvinyl acetate resins, polyolefin resins including polyethylenes and polypropylenes as well as copolymers thereof or modified resins thereof, and cellulose resins. The coating agents may be any of solvent-based coating agents and aqueous coating agents.

Of these, preferred coating agents are:

modified polyolefin coating agents, ethyl vinyl alcohol coating agents, polyethyleneimine coating agents, polybutadiene coating agents, polyurethane coating agents;

polyester polyurethane emulsion coating agents, polyvinyl chloride emulsion coating agents, urethane acrylic emulsion coating agents, silicon acrylic emulsion coating agents, vinyl acetate acrylic emulsion coating agents, acrylic emulsion coating agents;

styrene/butadiene copolymer latex coating agents, acrylonitrile/butadiene copolymer latex coating agents, methyl methacrylate/butadiene copolymer latex coating agents, chloroprene latex coating agents, rubber latex coating agents containing polybutadiene latex, polyacrylate ester latex coating agents, polyvinylidene chloride latex coating agents, polybutadiene latex coating agents, and coating agents which are latexes or dispersions resulting from the carboxylic acid modification of the resins in the above latex coating agents.

For example, these coating agents may be applied by methods such as gravure coating methods, reverse roll coating methods, knife coating methods and kiss-roll coating methods. The amount of coating to the substrate is usually

0.05 $g/m^2$ to 5 $g/m^2$ on dry basis.

Of these coating agents, polyurethane coating agents are more preferable. The polyurethane coating agents have a urethane bond in the main chain or a side chain of the resin contained in the coating agents. For example, the polyurethane coating agents contain a polyurethane obtained by reacting a polyol such as a polyester polyol, a polyether polyol or an acrylic polyol, with an isocyanate compound.

Of the polyurethane coating agents, excellent adhesion is advantageously provided by polyurethane coating agents obtained by mixing a polyester polyol such as a condensed polyester polyol or a lactone-based polyester polyol with an isocyanate compound such as tolylene diisocyanate, hexamethylene diisocyanate or xylene diisocyanate.

The polyol compounds and the isocyanate compounds may be mixed with each other by any methods without limitation. The mixing ratio is not particularly limited. When, however, the amount of the isocyanate compound is excessively small, curing failure may be caused. Thus, the equivalent ratio of the OH groups of the polyol compound to the NCO groups of the isocyanate compound is preferably in the range of 2/1 to 1/40.

The substrate in the invention may have a surface that has been activated by the aforementioned treatment.

The acrylic film used in the invention is usually such that the concentration of the anionic hydrophilic groups on one side of the surface is higher than the concentration of the anionic hydrophilic groups at a depth half the film thickness from the surface. When the substrate is present, the concentration of the anionic hydrophilic groups on the side of the surface opposite to the substrate is usually higher than the concentration of the anionic hydrophilic groups at a depth half the film thickness from the surface. In other words, the acrylic resin film is usually such that the concentration of the anionic hydrophilic groups on the side of the surface opposite to the side adjacent to the substrate is higher than the concentration of the anionic hydrophilic groups at a depth half the film thickness from the surface of the acrylic resin film.

In the invention, the ratio Sa/Da is preferably not less than 1.2, and more preferably not less than 1.3. While the upper limit is not limited, the ratio is usually 20 or less. In the invention, the ratio Sa/Da of the acrylic film is a value prior to the treatment with the compound (A). In the case where the film is treated with the compound (A) while the polymerization is still incomplete as will be described later, the ratio Sa/Da is a value of the incompletely polymerized mixture.

The treatment in the invention is usually carried out by applying a solution of the compound (A) and optionally a surfactant (a leveling agent) in a solvent to the surface of the gradient film, thereafter drying the solvent, then applying a radiation or heat to the coating to perform graft reaction, and finally removing the compound (A) that has not been involved in the graft reaction by washing or the like. The solution may be applied after the acrylic film (the gradient film) has been irradiated with a radiation or the like to generate radicals. Alternatively, the acrylic film may be produced without completing the polymerization and the solution may be applied to such a film. To render the polymerization incomplete, for example, the dose of radiation may be appropriately decreased from the level required for complete curing.

The degree of polymerization of the (meth)acrylic resin is usually calculated from the amount of residual (meth) acrylic groups. The residual (meth)acrylic groups may be quantitatively determined by analyzing the $>C=CH_2$ peak (808 $cm^{-1}$) by IR.

In general, films having a degree of polymerization of (meth) acrylic resins that is as low as about 10 mol% or below often tend to incur problems such as the breakage of the acrylic resin films during the graft treatment and the elution in the graft treatment liquid of the hydrophilic (meth) acrylate (A') having anionic hydrophilic groups with a gradient on the film surface and inside near the film surface. On the other hand, films that have been polymerized approximately to the same level as the usual radiation polymerization, that is, films having a polymerization degree of, for example, more than 60% disadvantageously tend to incur a decrease in the grafting rate (a decrease in the graft amount) due to the lowering of the polymer radical concentration at the surface and inside near the surface.

Accordingly, the degree of polymerization of the (meth)acrylic groups in the acrylic resin gradient films to be graft treated is preferably approximately 3 to 60 mol%, more preferably 20 to 60 mol%, and still more preferably 35 to 55 mol%.

From the viewpoint of solvent properties, the solvents used in the invention are preferably highly polar solvents. Examples include alcohols such as methanol, ethanol, isopropanol (IPA), n-propanol, n-butanol, ethylene glycol monomethyl ether (EGM) and 1,2-propylene glycol monomethyl ether (EGM), nitrogen-containing solvents such as acetonitrile and N,N-dimethylformamide (DMF), sulfur-containing solvents such as dimethylsulfoxide (DMSO) and sulfolane, water and mixtures of these solvents. Of these, alcohols, water and mixtures of these solvents are preferably used in light of relatively high solvent properties. From the viewpoint of safety, ethanol, water and a mixture of these solvents are more preferable.

The concentration of the compound (A) dissolved in the solvent may vary depending on the solvent selected, and is approximately 0.001 wt% to the saturated solubility, preferably 0.01 to 50 wt%, more preferably 0.01 to 20 wt% and still more preferably 0.1 to 10 wt%.

Surfactants (leveling agents) may be added as required mainly for the purpose of preventing the cissing of the coating liquid. Examples include carboxylate salts such as alkylcarboxylic acids and alkali metal or alkaline earth metal salts thereof, and polyoxyethylene alkylether carboxylic acids and alkali metal or alkaline earth metal salts thereof;

sulfonate salts such as alkylbenzenesulfonic acids and alkali metal or alkaline earth metal salts thereof, alkylnaphthalenesulfonic acids and alkali metal or alkaline earth metal salts thereof, polycondensates of alkali metal or alkaline earth metal salts of alkylnaphthalenesulfonic acids with formalin, polycondensates of alkali metal or alkaline earth metal salts of melaminesulfonic acids with formalin, dialkylsulfosuccinate esters and alkali metal or alkaline earth metal salts thereof, $\alpha$-olefinsulfonic acids and alkali metal or alkaline earth metal salts thereof, and N-acylsulfonic acids and alkali metal or alkaline earth metal salts thereof; sulfate ester salts such as sulfonated oils, alkali metal or alkaline earth metal salts of alkylsulfuric acids, alkali metal or alkaline earth metal salts of alkylether sulfuric acids, alkali metal or alkaline earth metal salts of polyoxyethylene alkylether sulfuric acids, and alkali metal or alkaline earth metal salts of alkylamide sulfuric acids; phosphate ester salts such as alkylphosphoric acids and alkali metal or alkaline earth metal salts thereof, polyoxyethylene alkylether phosphoric acids and alkali metal or alkaline earth metal salts thereof, and alkylaryl ether phosphoric acids and alkali metal or alkaline earth metal salts thereof; anionic surfactants such as aliphatic amine salts, quaternary ammonium salts, benzalkonium chlorides, benzethonium chlorides, pyridinium salts and imidazolinium salts; amphoteric surfactants such as carboxybetaine, aminocarboxylatesalts, imidazolinium betaine, lecithin and alkylamine oxides;

nonionic surfactants such as polyoxyethylene alkyl and aryl ethers, polyoxypropylene alkyl and aryl ethers, polyoxyethylene alkyl and aryl ethers of polyhydric alcohol esters, polyethylene glycol fatty acid esters, aliphatic alkanolamides and polyoxyethylene aliphatic amides; fluorine surfactants such as MEGAFACE manufactured by DIC Corporation, EFTOP manufactured by Mitsubishi Materials Electronic Chemicals Co., Ltd., SURFLON manufactured by ASAHI GLASS CO., LTD., Ftergent manufactured by NEOS COMPANY LIMITED, UNIDYNE manufactured by DAIKIN INDUSTRIES, LTD., Fluorad manufactured by Sumitomo 3M Limited, and Zonyl manufactured by Du Pont Kabushiki Kaisha; and silicon surfactants such as AQUALEN 8020, AQUALEN HS-01, AQUALEN SB-630, POLYFLOW KL-100, POLYFLOW KL-800 and POLYFLOW WS-30 manufactured by KYOEISHA CHEMICAL CO., LTD. Of these, silicon surfactants are relatively preferable.

The amount of the surfactants added as required is approximately in the range of 0.0001 to 20 wt%, preferably 0.001 to 10 wt%, and more preferably 0.01 to 5 wt% relative to the total of the compound (A) and the solvent.

The treatment liquid in the invention which contains the compound (A) may include, in addition to the compound (A), the solvent and the surfactant (the leveling agent), various organic compounds and inorganic compounds such as UV polymerization initiators, radical (heat) polymerization initiators, UV absorbers, HASLS and fillers as long as the object of the invention can be achieved.

The treatment liquid in the invention which contains the compound (A) may be applied by various methods such as, for example, dip coating methods, pouring coating methods, spray coating methods, bar coating methods, gravure coating methods, reverse roll coating methods, knife coating methods, kiss-roll coating methods and spin coating methods. The coating methods may be selected appropriately in accordance with the configurations such as shapes of the films.

After the application, the solvent may be dried by various methods such as natural drying, air guns, fans, dryers and ovens. Ovens tend to be suitably used. In the case of an oven, the drying conditions may be such that the temperature is approximately in the range of 30 to 120°C and the drying time is, for example, 1 minute to 10 hours. The drying of the solvent is not an essential step. For example, the solvent may be dried simultaneously with the graft reaction, or the graft reaction may be performed without the drying of the solvent.

When the compound (A) is grafted to the acrylic resin gradient film by the application of radiations, electron beams or UV (ultraviolet) rays in the range of 200 to 400 nm are preferably used. The energy applied for the graft reaction is approximately 100 to 5000 $mJ/cm^2$.

When the graft reaction is performed with heat, the coated film is heated at a temperature approximately in the range of 30 to 250°C for 0.1 to 24 hours.

After the graft reaction, the treated film (the acrylic resin modified film) is washed to remove the compound (A) that has not been involved in the graft reaction from the treated film (the acrylic resin modified film). Highly polar solvents such as water and alcohols may be preferably used.

By the graft treatment of the inventive acrylic resin gradient film with the compound (A), the hydrophilicity of the acrylic resin gradient film may be further improved and the antifogging properties may be enhanced. A small water contact angle (an improvement in hydrophilicity) may be obtained approximately in the range of 1 to 30°. The surface of the modified acrylic resin film treated with the compound (A) usually has a water contact angle of not more than 10°, preferably not more than 5°, and more preferably not more than 4°. In general, surfaces such as mirrors in bathrooms or the like easily become fogged. To prevent such fogging, the surface has to at least be rendered superhydrophilic such that the water contact angle is 5° or less and thereby the formation of water droplets is suppressed (water is allowed to form a thin film). It is also required that the surface remain resistant to fogging for a long term.

By virtue of the inventive hydrophilic treatment involving the grafting of the compound (A) to the acrylic resin hydrophilic film having a gradient of anionic hydrophilic groups, the formation of a water film is facilitated over a relatively long period of time. Thus, the inventive films are useful for antifogging materials and antifogging coating films (or antifogging coats) requiring high antifogging properties. Further, the inventive modified acrylic resin films probably have high antistatic performance and tend to exhibit excellent scratch resistance.

The highly hydrophilic modified acrylic resin films obtained by the present invention may be stacked onto various substrates such as PET, PC, PMMA and glass. For example, hydrophilic film stacks including the inventive coating films may be used as antifogging films or the like that can be readily attached to surfaces such as glasses, mirrors in fogging environments such as lavatories and bathrooms, screens such as displays and televisions, information boards such as signboards, advertisements and guideboards, indicators such as railroad indicators and traffic signs, exterior walls and interior walls of buildings, and window glasses.

Because of excellent hydrophilicity, the modified acrylic resin films obtained by the invention are also useful in other applications such as antifogging materials, antifouling materials, anti-condensation materials, anti-water droplet materials and antistatic materials. For example, the inventive films may be used in applications including materials for transport machines, typically automobiles, ships and airplanes, such as bodies, wheels, exterior materials and interior materials; building materials and housing materials such as exterior wall materials, interior wall materials, floor materials, furniture materials, bathroom materials, lavatory materials, kitchen materials such as air fans, toilet materials, and inner surface and outer surface materials for pipes; construction materials such as sound insulating boards located on roads such as expressways; garment materials such as cloths, fabrics and fibers; optical materials such as windows, mirrors, optical films, optical disks, eyeglasses, contact lenses, goggles, reflective films and reflectors; illuminating materials such as lamps and lights; industrial materials such as cooling fins; electric and electronic materials such as electric appliance materials, wiring materials, materials for displays such as touch panels and flat panels, and photoresists; printing base materials such as inkjet recording plates, and printing or typing primers; commodity materials such as cosmetic containers; and dental materials such as dentures.

From the foregoing, the present invention resides in the following.

[1]

A modified acrylic resin film obtained by treating a surface of an acrylic resin film having anionic hydrophilic groups with a compound (A), the acrylic resin film being such that the concentration of the anionic hydrophilic groups on the surface is higher than the concentration of the anionic hydrophilic groups at a depth half the film thickness from the surface of the acrylic resin film, the compound (A) having in the molecule thereof one or more anionic hydrophilic groups and one or more groups selected from groups having a polymerizable carbon-carbon double bond, amino groups, mercapto groups and hydroxyl groups.

[2]

The modified acrylic resin film described in [1], wherein the treatment is graft treatment.

[3]

The modified acrylic resin film described in [1] or [2], wherein the compound (A) is one or more selected from compounds represented by General Formulae (1) to (6):

General Formula (1)

[Chem. 16]

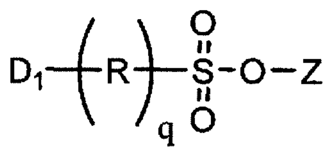

(1)

(in Formula (1), D1 is a (meth)acryloyloxy group (only when q is 1), a (meth)acryloylthio group (only when q is 1), a (meth)acrylamide group (only when q is 1), a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; R is a divalent aliphatic hydrocarbon group

having 1 to 600 carbon atoms and may include one or more groups selected from aromatic rings, alicyclic groups, ether groups and ester groups; and q is 0 or 1),

General Formula (2)

[Chem. 17]

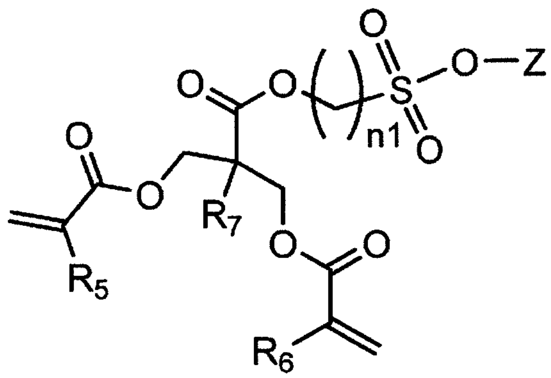

(2)

(in Formula (2), $R_5$ and $R_6$ represent a hydrogen atom or a methyl group; $R_7$ represents a hydrogen atom or an alkyl group having 1 to 6 carbon atoms; Z is a hydrogen ion, an ammonium ion, an amine ion, an alkali metal ion or an alkaline earth metal (1/2 atom) ion; and n1 is an integer of 1 to 10),

General Formula (3)

[Chem. 18]

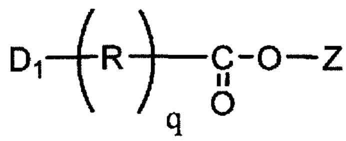

(3)

(in Formula (3), D1 is a (meth)acryloyloxy group (only when q is 1), a (meth)acryloylthio group (only when q is 1), a (meth)acrylamide group (only when q is 1), a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; R is a divalent aliphatic hydrocarbon group having 1 to 600 carbon atoms and may include one or more groups selected from aromatic rings, alicyclic groups, ether groups and ester groups; and q is 0 or 1),

General Formula (4)

[Chem. 19]

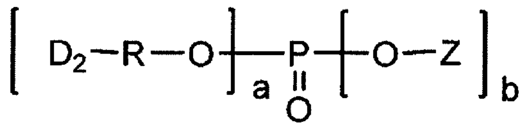

(4)

(in Formula (4), $D_2$ is a (meth) acryloyloxy group, a (meth)acryloylthio group, a (meth)acrylamide group, a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; R is a divalent aliphatic hydrocarbon group having 1 to 600 carbon atoms and may include one or more groups selected from aromatic rings, alicyclic groups, ether groups and ester groups; a and b represent integers of 1 or 2, and a + b = 3; when a is 2, $D_2$s or Rs may be the same or different from each other; and when b is 2, Zs may be the same or different from each other),

General Formula (5)

[Chem. 20]

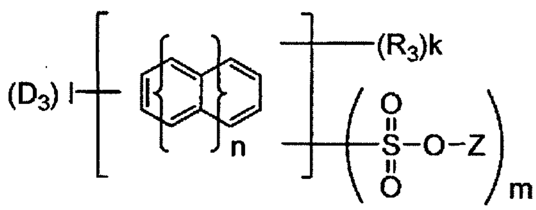

(5)

(in Formula (5), $D_3$, $R_3$ and $SO_3Z$ are groups bonded to carbon atoms on the ring(s) in the above formula; $D_3$ independently at each occurrence represents a vinyl group, an allyl group, an isopropenyl group, a styryl group, a mercapto group, an amino group, a methylamino group, an ethylamino group or a hydroxyl group; Z is a hydrogen ion, an ammonium ion, an amine ion, an alkali metal ion or an alkaline earth metal (1/2 atom) ion; $R_3$ independently at each occurrence represents H, a methyl group, an ethyl group, a methoxy group, an ethoxy group, a fluorine atom, a chlorine atom, a bromine atom or an iodine atom; k is an integer of 0 to 10; 1 and m independently represent an integer of 1 to 11; k + 1 + m = 2 to 6 + 2n; n is an integer of 0 to 3; when 1 is 2 or greater, $D_3$s may be the same or different from each other; when k is 2 or greater, $R_3$s may be the same or different from each other; and when m is 2 or greater, Zs may be the same or different from each other), and

General Formula (6)

[Chem. 21]

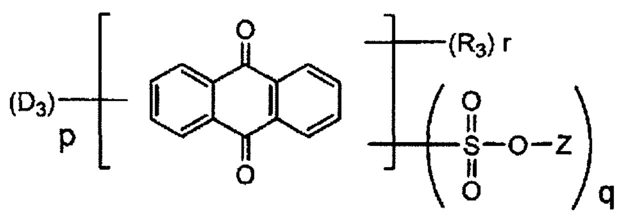

(6)

(in Formula (6), $D_3$, $R_3$ and $SO_3Z$ are groups bonded to carbon atoms on the ring(s) in the above formula; $D_3$ independently at each occurrence represents a vinyl group, an allyl group, an isopropenyl group, a styryl group, a mercapto group, an amino group, a methylamino group, an ethylamino group or a hydroxyl group; Z is a hydrogen ion, an ammonium ion, an amine ion, an alkali metal ion or an alkaline earth metal (1/2 atom) ion; $R_3$ independently at each

occurrence represents H, a methyl group, an ethyl group, a methoxy group, an ethoxy group, a fluorine atom, a chlorine atom, a bromine atom or an iodine atom; r is an integer of 0 to 6; q and p independently represent an integer of 1 to 7; p + q + r = 2 to 8; when p is 2 or greater, $D_3$s may be the same or different from each other; when r is 2 or greater, $R_3$s may be the same or different from each other; and when q is 2 or greater, Zs may be the same or different from each other).

[4]

The modified acrylic resin film described in [3], wherein the compounds represented by General Formula (1) are compounds represented by General Formula (7):

[Chem. 22]

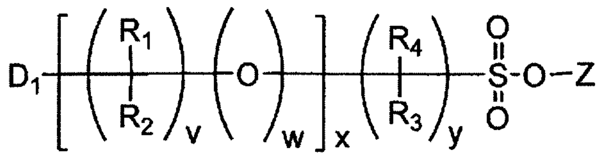

(7)

(in Formula (7), D1 is a (meth)acryloyloxy group (when any of x and y is 1 or greater), a (meth)acryloylthio group (when any of x and y is 1 or greater), a (meth) acrylamide group (when any of x and y is 1 or greater), a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; $R_1$ to $R_4$ are independently a hydrogen atom, an alkyl group having 1 to 6 carbon atoms or an alkoxy group having 1 to 6 carbon atoms; v and y are independently an integer of 0 to 10; w is 0 or 1 (when any of v and y is 0, w is 0); x is an integer of 0 to 10; when v is 2 or greater, $R_1$s or $R_2$s may be the same or different from each other; when y is 2 or greater, $R_3$s or $R_4$s may be the same or different from each other; and when x is 2 or greater, $R_1$s or $R_2$s may be the same or different from each other).

[5]

A stack including a substrate and the modified acrylic resin film described in any of [1] to [4].

[6]

A method for producing modified acrylic resin films, including treating a surface of an acrylic resin film having anionic hydrophilic groups with a compound (A), the acrylic resin film being such that the concentration of the anionic hydrophilic groups on the surface is higher than the concentration of the anionic hydrophilic groups at a depth half the film thickness from the surface of the acrylic resin film, the compound (A) having in the molecule thereof one or more anionic hydrophilic groups and one or more groups selected from groups having a polymerizable carbon-carbon double bond, amino groups, mercapto groups and hydroxyl groups.

[7]

The method for producing modified acrylic resin films described in [6], including a step of forming the acrylic resin film on a substrate.

[8]

The method for producing modified acrylic resin films described in [7], wherein the acrylic resin film is such that the concentration of the anionic hydrophilic groups on the side of the surface opposite to the side adjacent to the substrate is higher than the concentration of the anionic hydrophilic groups at a depth half the film thickness from the surface of the acrylic resin film.

[EXAMPLES]

The present invention will be described in greater detail by presenting examples hereinbelow without limiting the scope of the invention to such examples.

In the invention, properties of coating films were evaluated in the following manner.

(Measurement of degree of polymerization of acrylic resin films (resin films to be subjected to graft treatment))

An acrylic resin coating liquid was applied to a substrate, and a solvent was dried off. The intensity of the $>C=CH_2$ peak at 808 $cm^{-1}$ (a base line method) was measured before and after UV irradiation, and the polymerization degree was calculated from the following equation.

Polymerization degree (mol%) = (peak intensity before UV irradiation - peak intensity after UV irradiation)/peak intensity before UV irradiation × 100

(Measurement of anion and cation concentration ratio)

A sample was cut at a slant as illustrated in the view of sample preparation in Fig. 1. The anion concentration (Sa) in the outer surface and the anion concentration (Da) at the middle point were measured with a time-of-flight secondary ion mass spectrometer (TOF-SIMS). The obtained values were expressed as an anion concentration ratio (Sa/Da) of the anion concentration in the outer surface of the film in contact with the outside air to the anion concentration at the middle point between the inner surface and the outer surface of the film.

(Analyzer and measurement conditions)

TOF-SIMS: TOF-SIMS5 manufactured by ION TOF
Primary ions: $Bi_{32}^+$ (accelerating voltage 25 kV)
Measurement area: 400 $\mu m^2$

In the measurement, a neutralizing gun for correcting electric charges was used.

(Preparation and analysis of sample)

As illustrated in Fig. 1, a sample in which a coating layer 20 was disposed on a surface of a substrate 10 was cut at a slant accurately along a cutting direction 30. Thereafter, an approximately 10 × 10 $mm^2$ piece was cut out, and a mesh was placed on the measurement surface. The sample was then fixed to a sample holder, and the anion concentrations were measured with a time-of-flight secondary ion mass spectrometer (TOF-SIMS) with respect to a coating layer surface 40 in contact with the outside air and an inner portion 50 of the coating layer which was inside of the film (at a point half (1/2) the film thickness, a surface of the inside of the coating layer in contact with the substrate 10).

(Evaluation)

The evaluation was made according to the equation below. The ion concentrations at the measurement points were based on relative intensities (relative to the total of the detected ions).

Sa/Da (anion concentration ratio, degree of gradient) = anion concentration at coating layer surface 40/anion concentration at 1/2 film thickness of coating layer 20

(Measurement of water contact angle)

The water contact angle was measured with respect to 3 points for each sample by use of water contact angle meter CA-V manufactured by Kyowa Interface Science Co., Ltd. The measured values were averaged to give a value of water contact angle.

(Measurement of haze)

The haze was measured with respect to 4 points for each sample by use of haze meter NDH2000 manufactured by NIPPON DENSHOKU INDUSTRIES CO., LTD. The measured values were averaged to give a haze value.

(Evaluation of adhesion)

The adhesion was evaluated by a crosscut adhesion test.

(Evaluation of antifouling properties)

The surface was marked with oil-based marker "Mackee Gokuboso (ultrafine)" (black, code: MO-120-MC-BK) manufactured by ZEBRA CO. , LTD. , and water droplets were dropped thereon, allowed to stand for 30 seconds, and wiped with tissue paper. The antifouling properties were evaluated to be O when the mark came off, and × when the mark did not come off and remained.

(Evaluation of resistance to breath fogging)

The resistance to breath fogging was evaluated to be ○ when the surface did not become fogged with breath, and × when the surface became fogged with breath.

(Evaluation of antifogging properties with AFA-1)

An antifogging property evaluation device (antifog analyzer "AFA-1" manufactured by Kyowa Interface Science Co., Ltd.) was used in the measurement. The antifogging properties were evaluated to be O when all the antifogging indexes obtained during the measurement were 2 or below, and were evaluated to be × when the antifogging index exceeded 2 at least one time.

Conditions in measurement with AFA-1
Water vapor temperature: 35°C
Measurement room temperature: 16°C
Measurement method: Antifogging index was measured at time intervals of 3 seconds. The sample was allowed to stand from the start, namely, from 0 second until 15 seconds. → The 35°C water vapor was continuously sprayed from 15 seconds until 1 minute 15 seconds. → The spraying of water vapor was stopped and the sample was forcibly dried from 1 minute 15 seconds until 2 minutes 15 seconds.

[Production Example 1] Production of coating surface (hydrophilic film) having anionic hydrophilic groups]

(Preparation of coating solution 1)

According to the formulation shown in Table 1, a homogeneous coating liquid 1 having a solid content of 65 wt% was prepared.
[Table 1]

Table 1 Coating liquid 1

| Components | Amounts (g) | Concentrations (wt%) |
|---|---|---|
| SPA-K | 0.35 | 1.0% |
| P-2M | 0.09 | 0.2% |
| A-GLY-9E | 5.86 | 16.5% |
| A9300-1CL | 0.98 | 2.8% |

(continued)

| Components | Amounts (g) | Concentrations (wt%) |
|---|---|---|
| U-15HA | 12.70 | 35.7% |
| Methanol | 12.00 | 33.7% |
| Acetone | 3.00 | 8.4% |
| S-EED | 0.02 | 0.1% |
| Darocur 1173 | 0.60 | 1.7% |
| | 35.60 | 100.0% |
| Solid content (wt%) = | | 57% |

[Chem. 23]

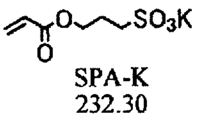

SPA-K
232.30

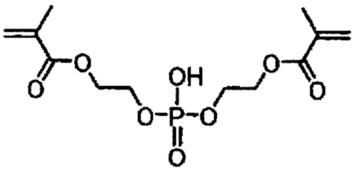

P-2M
322.25

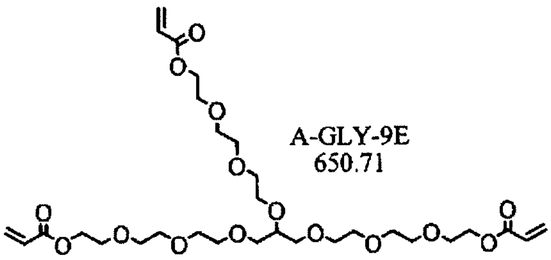

A-GLY-9E
650.71

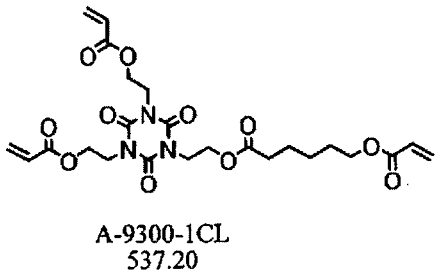

A-9300-1CL
537.20

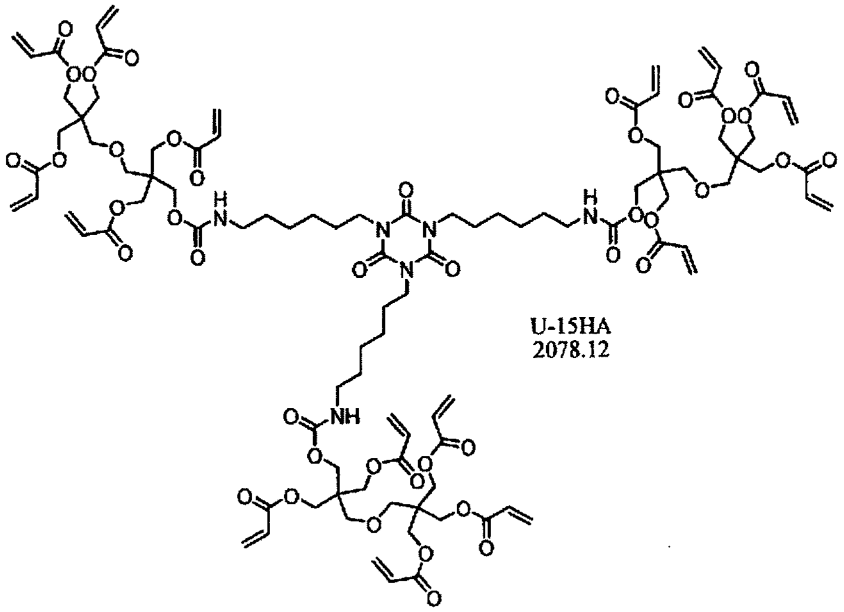

U-15HA
2078.12

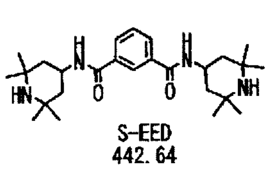

S-EED
442. 64

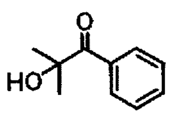

Darocur1173
164.20

(Measurement of solubility in cyclohexane:toluene = 5:1 (by weight))

To a mixed solution weighing 10.0 g which contained 8.3 g of cyclohexane and 1.7 g of toluene, 1.0 g of SPA-K (3-sulfopropyl acrylate potassium salt, a hydrophilic compound for forming a gradient film according to the invention) was added. The mixture was stirred at 25°C for 1 hour and was filtered through a 0.45 μm membrane filter.

The filtrate was added to an evaporating dish and was dried by being heated at 150°C for 2 hours. The residue was cooled to room temperature and the weight thereof was measured.

Lastly, the solubility in cyclohexane:toluene = 5:1 (by weight) was obtained according to the equation below.

$$Solubility\ (wt\%) = mass\ of\ residue\ (g)/\{10.0\ (g) + mass\ of\ residue\ (g)\} \times 100$$

The solubility was found to be less than 1 wt%. (Formation of films (gradient films) having concentration of anionic hydrophilic groups higher on the surface than at depth (inside) half the film thickness from the surface)

The coating solution 1 was applied onto a polycarbonate sheet (hereinafter, referred to as PC sheet) as a substrate with a bar coater No. 6 at room temperature (26°C-20% RH). The coating was allowed to stand (dry) for 1 minute and was passed one time through a UV conveyer (manufactured by Fusion UV Systems, Japan, an electrodeless discharge lamp, H valve, output 50%, conveyer speed 30 m/min) (accumulated dose 90 mJ/cm$^2$), thereby forming a gradient film with a film thickness of approximately 5 μm on the PC sheet. In the coating film, the degree of polymerization of acrylic groups was 50 mol%. Property measurements and TOF-SIMS analysis were performed. The results are shown in Table 2.

[Table 2]

Table 2

Results of analysis of coating film in Production Example 1

| | |
|---|---|
| Relative intensity of sulfonic groups on film surface, Sa (%) $SO^{3-}$ (m/z 80) | 4.6% |
| Relative intensity of sulfonic groups in middle portion of film, Sb (%) $SO^{3-}$ (m/z 80) | 2.3% |
| Degree of uneven distribution (gradient) of sulfonic groups in film $SO^{3-}$ on film surface/$SO^{3-}$ in middle portion | 2.0 |

[Example 1]

First, a treatment liquid for the graft treatment of a surface of the film produced in Production Example 1 was prepared according to the formulation described in Table 3.

[Table 3]

Table 3 Graft treatment liquid

| Components | Amounts (g) |
|---|---|
| Compound with anionic hydrophilic groups: SPA-K | 5.00 |
| Water | 50.00 |
| EGM: ethylene glycol monomethyl ether | 50.00 |
| Surfactant: POLYFLOW KL100 manufactured by KYOEISHA CHEMICAL CO., LTD. | 0.15 |
| Total | 105.15 |
| Solid content NV (wt%) = | 5.0% |

The graft treatment liquid was applied onto a surface of the coating film produced in Production Example 1 with a bar coater No. 20 and was hot air dried at 40 to 50°C for 2 to 3 minutes. Thereafter, the film was passed one time through a UV conveyer (manufactured by Fusion UV Systems, Japan, an electrodeless discharge lamp, H valve, output 100%, conveyer speed 6 m/min) (accumulated dose 900 mJ/cm$^2$), thereby performing the graft treatment on the surface of the coating film and completely curing the film. Lastly, the surface of the film obtained was washed with running water while lightly rubbing the surface with a polyurethane sponge. The film was then dried with a hot air dryer and was cooled to room temperature, thereby giving a coat. The results are shown in Table 6.

[Comparative Example 1]

The test was performed in the same manner as in Example 1, except that the graft treatment liquid was not applied. The results are shown in Table 6.

[Comparative Example 2] Graft treatment test 1 with respect to films without changes (gradient) of concentrations of anionic hydrophilic groups between on the surface and at depth (inside) half the film thickness from the surface Reference: JP-A-2001-98007, Kawamura Institute of Chemical Research

(List of compounds used)

"M-114": nonylphenoxypolyethylene glycol (n = 8) acrylate ("M-114" manufactured by TOAGOSEI CO., LTD., HLB value: 11.25)
"V-4263": trifunctional urethane acrylate oligomer having an average molecular weight of approximately 2000 ("UNIDIC V-4263" manufactured by DIC Corporation)
"HDDA": 1,6-hexanediol diacrylate ("NEW FRONTIER HDDA" manufactured by DAI-ICHI KOGYO SEIYAKU CO., LTD.)
"MR200": 2-methacryloyloxyethyl acid phosphate ("MR200" manufactured by DAIHACHI CHEMICAL INDUSTRY CO., LTD.)
"PMNE10": polyethylene glycol mono-4-nonyl phenyl ether ($n^1$ = 10) ("polyethylene glycol mono-4-nonyl phenyl ether (n' = 10)" manufactured by Tokyo Chemical Industry Co., Ltd.)
"Irg. 184": 1-hydroxycyclohexyl phenyl ketone ("IRGACURE 184" manufactured by Ciba-Geigy)

(Preparation of coating liquid)

A coating liquid was prepared by mixing 20 parts of "V-4263" and 20 parts of "HDDA" as crosslinkable polymerizable compounds, 60 parts of "M114" as a polymerizable compound, and 5 parts of "Irg. 184" as a photopolymerization initiator.

(Preparation of graft treatment liquid)

A solution as a hydrophilic layer-forming material was prepared by mixing 5 parts of "PMNE10", 5 parts of "MR200" as a hydrophilic compound, and 90 parts of water.

(Fabrication of coating film to be graft treated)

The coating liquid was applied onto a 2 mm thick PC sheet with a bar coater and was irradiated with UV rays to 200 mJ/$cm^2$ (accumulated dose) with use of the UV illuminator described in Example 1. Thus, a film was formed on the PC sheet.
In this film, the degree of polymerization of acrylic groups was 60 mol%.

(Graft treatment)

Next, the stack of the PC sheet and the film was placed in the graft treatment liquid prepared above for 1 minute, and was lifted. Thereafter, the stack was irradiated with UV rays to 1500 mJ/$cm^2$ (accumulated dose) and thereby the film was

completely cured.

The film obtained was washed with running water, dried with a hot air dryer, and cooled to room temperature, thereby giving a coat. The results are shown in Table 6.
[Comparative Example 3] Graft treatment test 2 with respect to films without changes (gradient) of concentrations of anionic hydrophilic groups between on the surface and at depth (inside) half the film thickness from the surface Reference: JP-A-2011-229734, Sekisui Hometechno Co., Ltd.

(Preparation of coating liquid)

A coating liquid was prepared according to the formulation shown in Table 4 below.
[Table 4]

Table 4 Composition of coating liquid

| Nos. | Components | | Amounts (g) | Concn. (wt%) |
|---|---|---|---|---|
| 1 | Oligomer | U-15HA manufactured by SHIN-NAKAMURA CHEMICAL CO., LTD. | 8.0 | 24.4% |
| 2 | Monomer | Pentaerythritol triacrylate | 2.0 | 6.1% |
| 3 | Photopolymerization initiator (IRGACURE 127) | 2-Hyrodxy-1-{4-[4-(2-hydroxy-2-methyl-propionyl)-benzyl]phenyl }-2-methyl-propan-1-one | 0.4 | 1.2% |
| 4 | Solvent-1 | Methyl ethyl ketone | 18.0 | 54.9% |
| 5 | Solvent-2 | Ethyl acetate | 1.3 | 4.0% |
| 6 | Solvent-3 | Toluene | 3.1 | 9.5% |
| | Total | | 32.8 | 100.0% |
| | Solid content = | | 32% | |

(Fabrication of coating film)

The above primer coating liquid was applied onto a PC sheet as a substrate with a spray gun while the dry film thickness was designed to be 12 μm (as dry). The wet film was dried by being allowed to stand at room temperature for 3 minutes and in a hot air dryer at 80°C for 3 minutes. In the same manner as in Example 1, the film was UV irradiated (lamp output 50%, conveyer speed 30 m/min, accumulated dose 90 mJ/$cm^2$), thereby giving a coating film on the PC sheet.
In the film, the degree of polymerization of acrylic groups was 50 mol%.

(Preparation of graft treatment liquid)

A graft treatment liquid was prepared according to the formulation shown in Table 5 below.
[Table 5]

Table 5

| Nos. | Components | | Amounts (g) | Concn. (wt%) |
|---|---|---|---|---|
| 1 | Hydrophilic monomer | ATBS: 2-acrylamido-2-methylpropanesulfonic acid manufactured by TOAGOSEI CO., LTD. | 10.0 | 21.6% |
| 2 | Alkali | Sodium carbonate | 2.6 | 5.6% |
| 3 | Solvent-1 | Ion exchange water | 12.6 | 27.2% |
| 4 | Solvent-2 | Ethanol | 22.6 | 48.8% |
| | Total | | 46.3 | 100.0% |
| | Solid content = | | 24% | |

(Graft treatment)

In the same manner as in Example 1, the surface of the coating film on the PC sheet was treated with the graft treatment liquid described in Table 5, thereby giving a coat. The results are shown in Table 6.
[Table 6]

Table 6

| Nos. | Appearance | Water contact angle (°) | Haze (%) | Adhesion | Antifouling properties | Antifogging properties Breath | Antifogging properties AFA-1 | Remarks |
|---|---|---|---|---|---|---|---|---|
| Ex. 1 | Transparent | 3 | 0.2 | 100/100 | ○ | ○ | ○ | Gradient + grafting |
| Comp. Ex. 1 | Transparent | 5 | 0.2 | 100/100 | ○ | ○ | × | Gradient alone |
| Comp. Ex. 2 | Transparent | 44 | 0.5 | 0/100 | × | × | × | Grafting alone |
| Comp. Ex. 3 | Slightly white | 34 | 2.3 | 0/100 | × | × | × | Grafting alone |

[Reference Example 1] Test with coating liquid 1 without anionic hydrophilic monomers

The test was performed in the same manner as in Example 1, except that the coating solution 1 described in Table 1 was replaced by a coating solution 2 described in Table 7. (The degree of polymerization of acrylic groups in the film before the graft treatment was 50 mol%.)

The stack of the graft treated film on the PC sheet was soaked in hot water at 90°C to evaluate hot water resistance. The result is shown in Table 8, together with the results obtained with the stacks of Example 1 and Comparative Example 1.

[Table 7]

Table 7 Coating liquid 2

| Components | Amounts (g) | Concentrations (wt%) |
|---|---|---|
| SPA-K | - | 0.0% |
| P-2M | - | 0.0% |
| A-GLY-9E | 5.86 | 16.7% |
| A9300-1CL | 0.98 | 2.8% |
| U-15HA | 12.70 | 36.1% |
| Methanol | 12.00 | 34.1% |
| Acetone | 3.00 | 8.5% |
| S-EED | 0.02 | 0.1% |
| Darocur 1173 | 0.60 | 1.7% |
| | 35.16 | 100.0% |
| Solid content (wt%) = | | 57% |

The films obtained in Example 1, Comparative Example 1 and Reference Example 1 were soaked in hot water at 90° for 1 day, 4 days, 9 days or 14 days, and the water contact angle and the haze were measured. The results are shown in Table 8.

[Table 8]

Table 8 90°C hot water soaking test

| Nos. | Duration of soaking in hot water at 90°C 0 day | 1 day | 4 days | 9 days | 14 days | Remarks |
|---|---|---|---|---|---|---|
| Ex. 1 | 3 | 4 | 4 | 4 | 4 | Gradient + grafting |
| | 0.2 | 0.2 | 0.2 | 0.3 | 0.3 | |
| Comp. Ex. 1 | 5 | 5 | 7 | 8 | 11 | Gradient alone |
| | 0.2 | 0.2 | 0.2 | 0.3 | 0.3 | |
| Ref. Ex. 1 | 5 | 5 | 8 | 22 | 30 | Grafting alone |
| | 0.2 | 0.2 | 0.2 | 0.3 | 0.3 | |

(continued)

| Nos. | Duration of soaking in hot water at 90°C | | | | | Remarks |
|---|---|---|---|---|---|---|
| | 0 day | 1 day | 4 days | 9 days | 14 days | |
| Upper values: water contact angle<br>Lower values: haze | | | | | | |

[Examples 2 to 17]

The test was performed in the same manner as in Example 1, except that the anionic hydrophilic compound (the grafting compound) in the graft treatment liquid described in Table 3 was changed. The results are shown in Table 9.

[Table 9-1]

Table 9 Test of graft treatment on surface of gradient film (anion-rich surface)

| Nos. | Grafting compounds | Appearance | Water contact angle (°) | Haze (%) | Adhesion | Antifouling properties | Antifogging properties Breath | Antifogging properties AFA-1 |
|---|---|---|---|---|---|---|---|---|
| Ex. 1 | 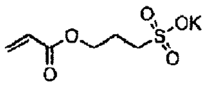 | Transparent | 3 | 0.2 | 100/100 | ○ | ○ | ○ |
| Ex. 2 | 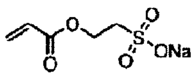 | Transparent | 3 | 0.2 | 100/100 | ○ | ○ | ○ |
| Ex. 3 | 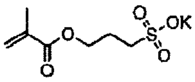 | Transparent | 4 | 0.2 | 100/100 | ○ | ○ | ○ |
| Ex. 4 | 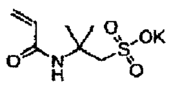 | Transparent | 4 | 0.2 | 100/100 | ○ | ○ | ○ |
| Ex. 5 | 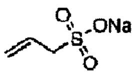 | Transparent | 4 | 0.2 | 100/100 | ○ | ○ | ○ |
| Ex. 6 | 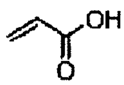 | Transparent | 4 | 0.2 | 100/100 | ○ | ○ | ○ |
| Ex. 7 | 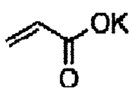 | Transparent | 4 | 0.2 | 100/100 | ○ | ○ | ○ |
| Ex. 8 | 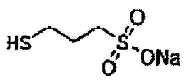 | Transparent | 4 | 0.2 | 100/100 | ○ | ○ | ○ |
| Ex. 9 | 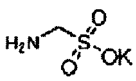 | Transparent | 3 | 0.2 | 100/100 | ○ | ○ | ○ |
| Ex. 10 | 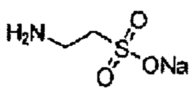 | Transparent | 3 | 0.2 | 100/100 | ○ | ○ | ○ |
| Ex. 11 | 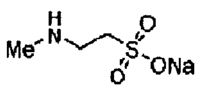 | Transparent | 4 | 0.2 | 100/100 | ○ | ○ | ○ |

[Table 9-2]

Table 9 Test of graft treatment on surface of gradient film (anion-rich surface) (continued)

| Nos. | Grafting compounds | Appearance | Water contact angle (°) | Haze (%) | Adhesion | Antifouling properties | Antifogging properties | |
|---|---|---|---|---|---|---|---|---|
| | | | | | | | Breath | AFA-1 |
| Ex. 12 | 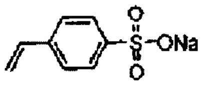 | Transparent | 4 | 0.2 | 100/100 | ○ | ○ | ○ |
| Ex. 13 | 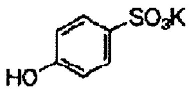 | Transparent | 4 | 0.2 | 100/100 | ○ | ○ | ○ |
| Ex. 14 | 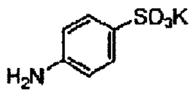 | Transparent | 4 | 0.2 | 100/100 | ○ | ○ | ○ |
| Ex. 15 | 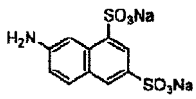 | Transparent | 4 | 0.3 | 100/100 | ○ | ○ | ○ |
| Ex. 16 | 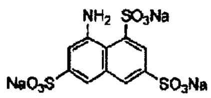 | Transparent | 3 | 0.3 | 100/100 | ○ | ○ | ○ |
| Ex. 17 | 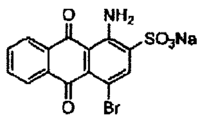 | Transparent | 4 | 0.3 | 100/100 | ○ | ○ | ○ |

[Reference Examples 1 to 6]

The test was performed in the same manner as in Reference Example 1, except that the anionic hydrophilic compound (the grafting compound) in the graft treatment liquid described in Table 3 was changed. The results are shown in Table 10.

[Table 10]

Table 10 Test of graft treatment on surface of simple acrylic resin (without gradient)

| Nos. | Grafting compounds | Appearance | Water contact angle (°) | Haze (%) | Adhesion | Antifouling properties | Antifogging properties | |
|---|---|---|---|---|---|---|---|---|
| | | | | | | | Breath | AFA-1 |
| Ref. Ex. 1 | 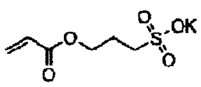 | Transparent | 5 | 0.2 | 92/100 | ○ | ○ | × |
| Ref. Ex. 2 | 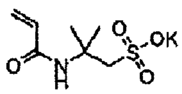 | Transparent | 30 | 1.2 | 69/100 | × | × | × |
| Ref. Ex. 3 | 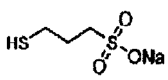 | Transparent | 13 | 0.3 | 0/100 | ○ | × | × |
| Ref. Ex. 4 | 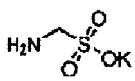 | Transparent | 47 | 0.2 | 94/100 | × | × | × |
| Ref. Ex. 5 | 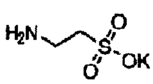 | Transparent | 43 | 0.2 | 80/100 | × | × | × |

(continued)

| Nos. | Grafting compounds | Appearance | Water contact angle (°) | Haze (%) | Adhesion | Antifouling properties | Antifogging properties Breath | AFA-1 |
|---|---|---|---|---|---|---|---|---|
| Ref. Ex. 6 | 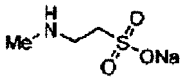 | Transparent | 36 | 0.2 | 65/100 | × | × | × |

Reference Signs List

10: SUBSTRATE
20: COATING LAYER
30: CUTTING DIRECTION
40: COATING LAYER SURFACE
50: INSIDE OF COATING LAYER

## Claims

1. A modified acrylic resin film obtained by treating a surface of an acrylic resin film having anionic hydrophilic groups with a compound (A), the acrylic resin film being such that the concentration of the anionic hydrophilic groups on the surface is higher than the concentration of the anionic hydrophilic groups at a depth half the film thickness from the surface of the acrylic resin film, the compound (A) having in the molecule thereof one or more anionic hydrophilic groups and one or more groups selected from groups having a polymerizable carbon-carbon double bond, amino groups, mercapto groups and hydroxyl groups.

2. The modified acrylic resin film according to claim 1, wherein the treatment is graft treatment.

3. The modified acrylic resin film according to claim 1 or 2, wherein the compound (A) is one or more selected from compounds represented by General Formulae (1) to (6):

General Formula (1)

[Chem. 1]

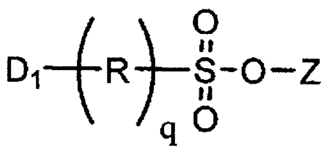

(1)

(in Formula (1), $D_1$ is a (meth)acryloyloxy group (only when q is 1), a (meth)acryloylthio group (only when q is 1), a (meth)acrylamide group (only when q is 1), a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; R is a divalent aliphatic hydrocarbon group having 1 to 600 carbon atoms and may include one or more groups selected from aromatic rings, alicyclic groups, ether groups and ester groups; and q is 0 or 1),
General Formula (2)

[Chem. 2]

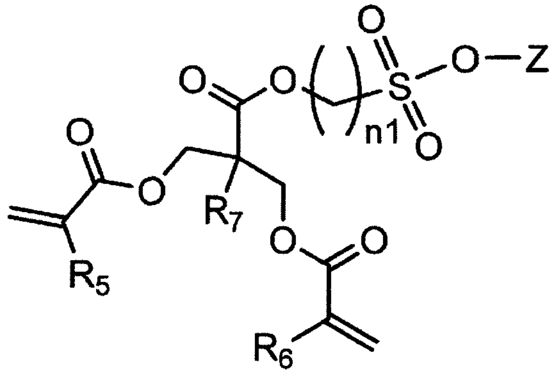

(2)

(in Formula (2), $R_5$ and $R_6$ represent a hydrogen atom or a methyl group; $R_7$ represents a hydrogen atom or an alkyl group having 1 to 6 carbon atoms; Z is a hydrogen ion, an ammonium ion, an amine ion, an alkali metal ion or an alkaline earth metal (1/2 atom) ion; and n1 is an integer of 1 to 10),
General Formula (3)

[Chem. 3]

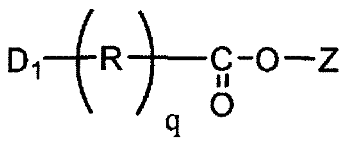

(3)

(in Formula (3), $D_1$ is a (meth)acryloyloxy group (only when q is 1), a (meth)acryloylthio group (only when q is 1), a (meth)acrylamide group (only when q is 1), a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; R is a divalent aliphatic hydrocarbon group having 1 to 600 carbon atoms and may include one or more groups selected from aromatic rings, alicyclic groups, ether groups and ester groups; and q is 0 or 1),
General Formula (4)

[Chem. 4]

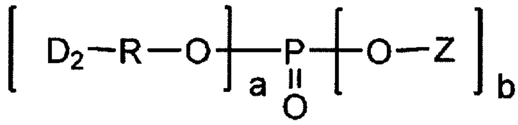

(4)

(in Formula (4), $D_2$ is a (meth)acryloyloxy group, a (meth)acryloylthio group, a (meth)acrylamide group, a vinyl group, an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; R is a divalent aliphatic hydrocarbon group having 1 to 600 carbon atoms and may include one or more groups selected from aromatic rings, alicyclic groups, ether groups and ester groups; a and b represent integers of 1 or 2, and a + b = 3; when a is 2, $D_2$s or Rs may be the same or different from each other; and when b is 2, Zs may be the same or different from each other),
General Formula (5)

[Chem. 5]

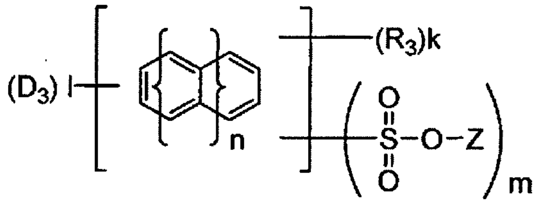

(5)

(in Formula (5), $D_3$, $R_3$ and $SO_3Z$ are groups bonded to carbon atoms on the ring (s) in the above formula; $D_3$ independently at each occurrence represents a vinyl group, an allyl group, an isopropenyl group, a styryl group, a mercapto group, an amino group, a methylamino group, an ethylamino group or a hydroxyl group; Z is a hydrogen ion, an ammonium ion, an amine ion, an alkali metal ion or an alkaline earth metal (1/2 atom) ion; $R_3$ independently at each occurrence represents H, a methyl group, an ethyl group, a methoxy group, an ethoxy group, a fluorine atom, a chlorine atom, a bromine atom or an iodine atom; k is an integer of 0 to 10; 1 and m independently represent an integer of 1 to 11; $k + 1 + m = 2$ to $6 + 2n$; n is an integer of 0 to 3; when 1 is 2 or greater, $D_3$s may be the same or different from each other; when k is 2 or greater, $R_3$s may be the same or different from each other; and when m is 2 or greater, Zs may be the same or different from each other), and General Formula (6)

[Chem. 6]

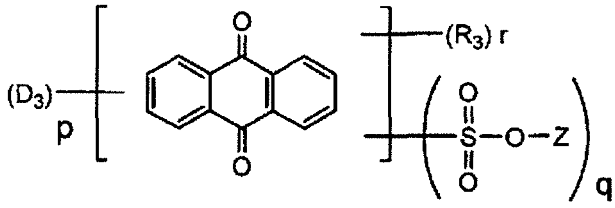

(6)

(in Formula (6), $D_3$, $R_3$ and $SO_3Z$ are groups bonded to carbon atoms on the ring (s) in the above formula; $D_3$ independently at each occurrence represents a vinyl group, an allyl group, an isopropenyl group, a styryl group, a mercapto group, an amino group, a methylamino group, an ethylamino group or a hydroxyl group; Z is a hydrogen ion, an ammonium ion, an amine ion, an alkali metal ion or an alkaline earth metal (1/2 atom) ion; $R_3$ independently at each occurrence represents H, a methyl group, an ethyl group, a methoxy group, an ethoxy group, a fluorine atom, a chlorine atom, a bromine atom or an iodine atom; r is an integer of 0 to 6; q and p independently represent an integer of 1 to 7; $p + q + r = 2$ to 8; when p is 2 or greater, $D_3$s may be the same or different from each other; when r is 2 or greater, $R_3$s may be the same or different from each other; and when q is 2 or greater, Zs may be the same or different from each other).

**4.** The modified acrylic resin film according to claim 3, wherein the compounds represented by General Formula (1) are compounds represented by General Formula (7):

[Chem. 7]

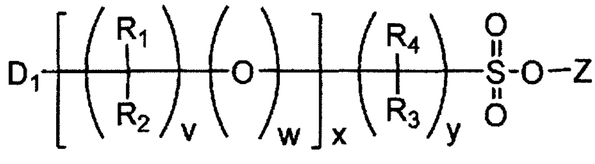

(7)

(in Formula (7), $D_1$ is a (meth)acryloyloxy group (when any of x and y is 1 or greater), a (meth)acryloylthio group (when any of x and y is 1 or greater), a (meth) acrylamide group (when any of x and y is 1 or greater), a vinyl group,

an allyl group, an isopropenyl group, a styryl group, a mercapto group, an amino group, a methylamino group or an ethylamino group; Z is a hydrogen ion, an ammonium ion, an amine ion, an alkali metal ion or an alkaline earth metal (1/2 atom) ion; $R_1$ to $R_4$ are independently a hydrogen atom, an alkyl group having 1 to 6 carbon atoms or an alkoxy group having 1 to 6 carbon atoms; v and y are independently an integer of 0 to 10; w is 0 or 1 (when any of v and y is 0, w is 0); x is an integer of 0 to 10; when v is 2 or greater, $R_1$s or $R_2$s may be the same or different from each other; when y is 2 or greater, $R_3$s or $R_4$s may be the same or different from each other; and when x is 2 or greater, $R_1$s or $R_2$s may be the same or different from each other).

**5.** A stack comprising a substrate and the modified acrylic resin film described in any of claims 1 to 4.

**6.** A method for producing modified acrylic resin films, comprising treating a surface of an acrylic resin film having anionic hydrophilic groups with a compound (A), the acrylic resin film being such that the concentration of the anionic hydrophilic groups on the surface is higher than the concentration of the anionic hydrophilic groups at a depth half the film thickness from the surface of the acrylic resin film, the compound (A) having in the molecule thereof one or more anionic hydrophilic groups and one or more groups selected from groups having a polymerizable carbon-carbon double bond, amino groups, mercapto groups and hydroxyl groups.

**7.** The method for producing modified acrylic resin films according to claim 6, comprising a step of forming the acrylic resin film on a substrate.

**8.** The method for producing modified acrylic resin films according to claim 7, wherein the acrylic resin film is such that the concentration of the anionic hydrophilic groups on the side of the surface opposite to the side adjacent to the substrate is higher than the concentration of the anionic hydrophilic groups at a depth half the film thickness from the surface of the acrylic resin film.

[Fig. 1]

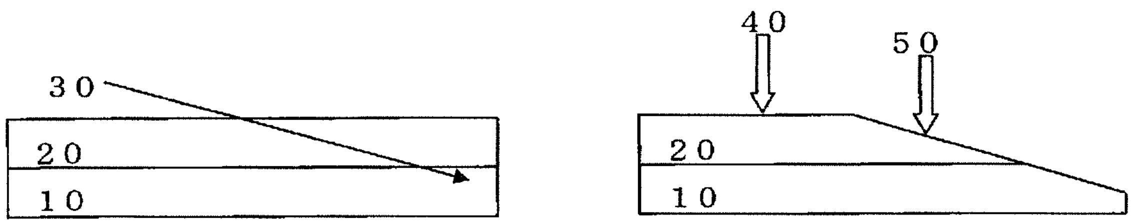

## INTERNATIONAL SEARCH REPORT

International application No.
PCT/JP2013/065722

A. CLASSIFICATION OF SUBJECT MATTER
*C08J7/12*(2006.01)i, *C08J7/16*(2006.01)i

According to International Patent Classification (IPC) or to both national classification and IPC

B. FIELDS SEARCHED

Minimum documentation searched (classification system followed by classification symbols)
C08J5/00-5/02, C08J5/12-5/22, C08J7/00-7/02, C08J7/12-7/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2012/014829 A1 (Mitsui Chemicals, Inc.), 02 February 2012 (02.02.2012), claims 1, 4, 6, 7; paragraphs [0001], [0066] to [0068], [0100] to [0110], [0163] to [0165], [0193] & US 2013/0156959 A1 & EP 2599799 A & CN 103025766 A & KR 10-2013-0036059 A | 1-8 |
| Y | JP 2001-098007 A (Kawamura Institute of Chemical Research), 10 April 2001 (10.04.2001), claims 1, 2, 8, 9; paragraphs [0025], [0034], [0049], [0052] to [0055] (Family: none) | 1-8 |

☒ Further documents are listed in the continuation of Box C.　　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 September, 2013 (03.09.13) | 17 September, 2013 (17.09.13) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No. PCT/JP2013/065722

C (Continuation). DOCUMENTS CONSIDERED TO BE RELEVANT

| Category* | Citation of document, with indication, where appropriate, of the relevant passages | Relevant to claim No. |
|---|---|---|
| Y | JP 05-186620 A (Mitsubishi Rayon Co., Ltd.), 27 July 1993 (27.07.1993), claims 1, 2; examples (Family: none) | 1-3,5-8 |
| Y | WO 2007/064003 A1 (Mitsui Chemicals, Inc.), 07 June 2007 (07.06.2007), claims 1, 4, 5; paragraphs [0040] to [0043], [0054] & US 2009/0191373 A1 & EP 1955782 A1 & CN 101309760 A & KR 10-2008-0075540 A | 3,4 |
| Y | JP 2009-073923 A (Mitsui Chemicals, Inc.), 09 April 2009 (09.04.2009), claims (Family: none) | 3 |
| Y | JP 2008-185530 A (AI Bio-chips Co., Ltd.), 14 August 2008 (14.08.2008), paragraph [0039] (Family: none) | 3 |
| Y | JP 2011-219512 A (Menicon Co., Ltd.), 04 November 2011 (04.11.2011), paragraphs [0076], [0079], [0161] (Family: none) | 3 |
| A | JP 10-101827 A (Sekisui Chemical Co., Ltd.), 21 April 1998 (21.04.1998), claims (Family: none) | 1-8 |
| A | JP 10-053658 A (Dainippon Ink and Chemicals, Inc.), 24 February 1998 (24.02.1998), claim 1; paragraphs [0042] to [0045] & US 5889073 A | 1-8 |
| A | JP 04-175349 A (Mitsubishi Rayon Co., Ltd.), 23 June 1992 (23.06.1992), claims & US 5503897 A & EP 429009 A2 | 1-8 |
| A | JP 2000-319406 A (Kawamura Institute of Chemical Research), 21 November 2000 (21.11.2000), claim 1; paragraphs [0010], [0027] (Family: none) | 1-8 |
| A | WO 2009/099210 A1 (Mitsubishi Rayon Co., Ltd.), 13 August 2009 (13.08.2009), claims 1, 2; paragraphs [0041], [0044] (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001098007 A
- JP 2011229734 A
- WO 2007064003 A
- WO 2012014829 A


### Non-patent literature cited in the description


- TREND, annual research report. TOAGOSEI CO., LTD, February 1999, 39-44
- **MIRAI ZAIRYOU.** *Future materials,* vol. 2 (1), 36-41